# EUROPEAN PATENT APPLICATION

(11) **EP 3 616 911 A1**
(43) Date of publication of application: **04.03.2020**
(21) Application number: 18791548.3
(22) Date of filing: 11.04.2018
(51) Int. Cl.: B32B 27/30, B32B 27/16, C09D 133/14

(54) **ACTIVE ENERGY RAY-CURABLE RESIN COMPOSITION, ANTI-FOGGING AND ANTI-FOULING LAMINATE, METHOD FOR PRODUCING SAME, ARTICLE AND ANTI-FOGGING METHOD**

(30) Priority: 26.04.2017 JP 2017087437
(71) Applicant: Dexerials Corporation, Tokyo 141-0032 (JP)
(72) Inventor: SUZUKI, Ryo, Tokyo 141-0032 (JP); MIZUNO, Mikihisa, Tokyo 141-0032 (JP); HARA, Shinobu, Tokyo 141-0032 (JP)
(74) Representative: Graf von Stosch Patentanwaltsgesellschaft mbH
(86) International application number: PCT/JP2018/015171
(87) International publication number: WO 2018/198768

(57) **Abstract**

An anti-fogging and anti-fouling laminate including: a substrate; a primer layer; and an anti-fogging and anti-fouling layer having a flat surface,
wherein an average thickness of the primer layer is more than 0.5 µm,
the anti-fogging and anti-fouling layer has Martens hardness of 10 N/mm² or more, a coefficient of kinetic friction of 0.40 or less, and an average thickness of 10 µm or more,
the anti-fogging and anti-fouling layer is a cured product of an active energy ray curable resin composition including a hydrophilic monomer, a crosslinking agent, and a hydrophobic monomer,
a content of the crosslinking agent in the active energy ray curable resin composition is 5% by mass to 40% by mass relative to non-volatile matter thereof, and a content of the hydrophobic monomer in the active energy ray curable resin composition is 0.001% by mass to 10% by mass relative to the non-volatile matter.

## Description

### Technical Field

The present invention relates to an anti-fogging and anti-fouling laminate that can be used in a wide variety of ranges such as building applications, industrial applications, automobile applications, optical applications, and solar cell panels, a production method thereof, a product using the anti-fogging and anti-fouling laminate, an anti-fogging method using the anti-fogging and anti-fouling laminate, and an active energy ray curable resin composition applicable to formation of an anti-fogging and anti-fouling layer of the anti-fogging and anti-fouling laminate.

### Background Art

In order to decorate and protect the surfaces of various products, resin films and glass and the like are attached to the surfaces.

However, the resin films and glass decorating and protecting the surfaces of products sometimes get cloudy to deteriorate visibility and good appearance of the products.

Therefore, in order to prevent such deterioration of visibility and good appearance of the products, an anti-fogging treatment is applied to the resin films and glass.

For example, an electron beam curable hard coat sheet that has an anti-fogging property and a fouling property and has a specific formulation has been proposed (for example, see PTL 1).

Generally, products such as mirrors, glass windows, and glasses, which are required to have an anti-fogging property, may be exposed to higher temperature and higher humidity conditions than normal temperature and normal humidity in some cases. In that case, deterioration of the anti-fogging property or loss of brightness occurs on the anti-fogging and anti-fouling layer, the products are deteriorated in visibility, which is problematic.

### Citation List

### Patent Literature

PTL 1 Japanese Patent No. 3760669

### Summary of Invention

### Technical Problem

An object of the present invention is to solve the existing problems in prior art and to achieve the following object. That is, an object of the present invention is to provide: an anti-fogging and anti-fouling laminate, which is excellent in appearance, a fouling property, and durability, and is not deteriorated in the appearance and is excellent in an anti-fogging property even under higher temperature and higher humidity conditions; a production method thereof; a product using the anti-fogging and anti-fouling laminate; an anti-fogging method using the anti-fogging and anti-fouling laminate; and an active energy ray curable resin composition applicable to formation of an anti-fogging and anti-fouling layer of the anti-fogging and anti-fouling laminate.

### Solution to Problem

Means for solving the problems are as follows. That is,
<1> An anti-fogging and anti-fouling laminate including:
   a substrate;
   a primer layer on the substrate; and
   an anti-fogging and anti-fouling layer on the primer layer, the anti-fogging and anti-fouling layer having a flat surface,
   wherein an average thickness of the primer layer is more than 0.5 µm,
   the anti-fogging and anti-fouling layer has Martens hardness of 10 N/mm² or more, a coefficient of kinetic friction of 0.40 or less, and an average thickness of 10 µm or more,
   the anti-fogging and anti-fouling layer is a cured product of an active energy ray curable resin composition,
   the active energy ray curable resin composition includes a hydrophilic monomer having an alkylene oxide equivalent of less than 100 and an acrylic equivalent of 200 to 500, a non-alicyclic crosslinking agent having an alkylene oxide equivalent of 100 or more and an acrylic equivalent of less than 400, and a hydrophobic monomer including at least one selected from the group consisting of fluorine and silicon,
   a content of the crosslinking agent in the active energy ray curable resin composition is 5% by mass to 40% by mass relative to non-volatile matter of the active energy ray curable resin composition, and
   a content of the hydrophobic monomer in the active energy ray curable resin composition is 0.001% by mass to 10% by mass relative to the non-volatile matter of the active energy ray curable resin composition.
<2> The anti-fogging and anti-fouling laminate according to <1>,
   wherein a surface of the anti-fogging and anti-fouling layer has a pure water contact angle of 80° or more and a hexadecane contact angle of 35° or more.
<3> The anti-fogging and anti-fouling laminate according to <1> or <2>,
   wherein when the anti-fogging and anti-fouling laminate is evaluated for an anti-fogging property through an evaluation method below, a result of the anti-fogging property is A:
   <Evaluation method of anti-fogging property>
   after left to stand for 2 hours under an environment of normal temperature, the anti-fogging and anti-fouling laminate is exposed to a high temperature and high humidity environment of 35°C and 85% RH for 15 minutes; and a surface of the anti-fogging and anti-fouling laminate is visually observed during exposure to the high temperature and high humidity environment and is evaluated for the anti-fogging property based on evaluation criteria below:
   [Evaluation criteria]
   A: until 15 minutes after, an area of the anti-fogging and anti-fouling laminate that exhibits fogging is 30% or less;
   B: until 10 minutes after, an area of the anti-fogging and anti-fouling laminate that exhibits fogging is 30% or less;
   C: until 5 minutes after, an area of the anti-fogging and anti-fouling laminate that exhibits fogging is 30% or less; and
   D: in 5 minutes, an area of the anti-fogging and anti-fouling laminate that exhibits fogging is more than 30%.
<4> The anti-fogging and anti-fouling laminate according to any one of <1> to <3>,
   wherein a content of the hydrophilic monomer in the active energy ray curable resin composition is 55% by mass to 90% by mass relative to the non-volatile matter of the active energy ray curable resin composition.
<5> The anti-fogging and anti-fouling laminate according to any one of <1> to <4>,
   wherein the substrate is a substrate made of glass.
<6> The anti-fogging and anti-fouling laminate according to any one of <1> to <5>,
   wherein an average thickness of the anti-fogging and anti-fouling layer is 10 µm to 100 µm.
<7> The anti-fogging and anti-fouling laminate according to any one of <1> to <6>,
   wherein an average thickness of the primer layer is 1 µm to 10 µm.
<8> A product including:
   the anti-fogging and anti-fouling laminate according to any one of <1> to <7> on a surface of the product.
<9> A method for producing an anti-fogging and anti-fouling laminate, the method including:
   irradiating an uncured layer formed of the active energy ray curable resin composition on the primer layer with ultraviolet rays under an atmosphere having an oxygen concentration of less than 0.1% by volume to form the anti-fogging and anti-fouling layer,
   wherein the anti-fogging and anti-fouling laminate is the anti-fogging and anti-fouling laminate according to any one of <1> to <7>.
<10> An anti-fogging method including:
   warming the anti-fogging and anti-fouling laminate according to any one of <1> to <7> to a temperature equal to or higher than normal temperature to improve an anti-fogging property of the anti-fogging and anti-fouling layer.
<11> An anti-fogging method including:
   cleaning the anti-fogging and anti-fouling layer of the anti-fogging and anti-fouling laminate according to any one of <1> to <7> to maintain an anti-fogging property of the anti-fogging and anti-fouling layer.
<12> An active energy ray curable resin composition including:
   a hydrophilic monomer;
   a hydrophobic monomer;
   a non-alicyclic crosslinking agent; and
   a photopolymerization initiator,
   wherein the hydrophilic monomer has an alkylene oxide equivalent of less than 100 and an acrylic equivalent of 200 to 500,
   the hydrophobic monomer includes at least one selected from the group consisting of fluorine and silicon,
   the crosslinking agent has an alkylene oxide equivalent of 100 or more and an acrylic equivalent of less than 400,
   a content of the hydrophobic monomer is 0.001% by mass to 10% by mass relative to non-volatile matter of the active energy ray curable resin composition, and
   a content of the crosslinking agent is 5% by mass to 40% by mass relative to the non-volatile matter of the active energy ray curable resin composition.
<13> The active energy ray curable resin composition according to <12>,
   wherein a surface of an anti-fogging and anti-fouling layer having a flat surface, which is obtained by curing the active energy ray curable resin composition through active energy rays, has Martens hardness of 10 N/mm² or more and a coefficient of kinetic friction of 0.40 or less.
<14> The active energy ray curable resin composition according to <13>,
   wherein the surface of the anti-fogging and anti-fouling layer has a pure water contact angle of 80° or more and a hexadecane contact angle of 35° or more.
<15> The active energy ray curable resin composition according to any one of <12> to <14>,
   wherein a content of the hydrophilic monomer in the active energy ray curable resin composition is 55% by mass to 90% by mass relative to the non-volatile matter of the active energy ray curable resin composition.
<16> The active energy ray curable resin composition according to any one of <12> to <15>,
   wherein the active energy ray curable resin composition includes a solvent having a boiling point of 80°C or more.

### Advantageous Effects of Invention

According to the present invention, it is possible to solve the existing problems in prior art, to achieve the aforementioned object, and to provide: an anti-fogging and anti-fouling laminate, which is excellent in appearance, a fouling property, and durability, and is not deteriorated in the appearance and is excellent in an anti-fogging property even under higher temperature and higher humidity conditions; a production method thereof; a product using the anti-fogging and anti-fouling laminate; an anti-fogging method using the anti-fogging and anti-fouling laminate; and an active energy ray curable resin composition applicable to formation of an anti-fogging and anti-fouling layer of the anti-fogging and anti-fouling laminate.

### Brief Description of Drawings

FIG. 1 is a schematic cross-sectional view of an example of an anti-fogging and anti-fouling laminate of the present invention;
FIG. 2A is a process drawing for describing an example of manufacturing a product of the present invention by in-mold molding;
FIG. 2B is a process drawing for describing an example of manufacturing a product of the present invention by in-mold molding;
FIG. 2C is a process drawing for describing an example of manufacturing a product of the present invention by in-mold molding;
FIG. 2D is a process drawing for describing an example of manufacturing a product of the present invention by in-mold molding;
FIG. 2E is a process drawing for describing an example of manufacturing a product of the present invention by in-mold molding;
FIG. 2F is a process drawing for describing an example of manufacturing a product of the present invention by in-mold molding;
FIG. 3 is a schematic cross-sectional view of an example of a product of the present invention (part 1);
FIG. 4 is a schematic cross-sectional view of an example of a product of the present invention (part 2);
FIG. 5 is a schematic cross-sectional view of an example of a product of the present invention (part 3);
FIG.6 is a schematic cross-sectional view of an example of a product of the present invention (part 4);
FIG. 7A is a schematic view for describing a method of a cloudiness test through vapor; and
FIG. 7B is a schematic view for describing a method of a cloudiness test through vapor.

### Description of Embodiments

### (Anti-fogging and anti-fouling laminate)

An anti-fogging and anti-fouling laminate of the present invention includes at least a substrate, a primer layer, and an anti-fogging and anti-fouling layer, and further includes other members if necessary.

### <Characteristics of anti-fogging and anti-fouling laminate>

The anti-fogging and anti-fouling laminate has the following characteristics.

An average thickness of the primer layer is more than 0.5 µm.

The anti-fogging and anti-fouling layer has a coefficient of kinetic friction of 0.40 or less.

The anti-fogging and anti-fouling layer has an average thickness of 10 µm or more.

The anti-fogging and anti-fouling layer has Martens hardness of 10 N/mm² or more.

The anti-fogging and anti-fouling layer is a cured product of an active energy ray curable resin composition.

The active energy ray curable resin composition includes a hydrophilic monomer having an alkylene oxide equivalent of less than 100 and an acrylic equivalent of 200 to 500, a non-alicyclic crosslinking agent having an alkylene oxide equivalent of 100 or more and an acrylic equivalent of less than 400, and a hydrophobic monomer including at least one selected from the group consisting of fluorine and silicon.

A content of the crosslinking agent in the active energy ray curable resin composition is 5% by mass to 40% by mass relative to non-volatile matter of the active energy ray curable resin composition.

A content of the hydrophobic monomer in the active energy ray curable resin composition is 0.001% by mass to 10% by mass relative to the non-volatile matter of the active energy ray curable resin composition.

When the anti-fogging and anti-fouling laminate has the aforementioned characteristics, the anti-fogging and anti-fouling laminate is excellent in appearance, a fouling property, and durability, and is not deteriorated in the appearance and is excellent in an anti-fogging property even under higher temperature and higher humidity conditions.

Here, the "durability" is a general term of scratch resistance, chemical resistance, coat close adhesiveness, and pencil hardness. The phrase "excellent in durability" means that favorable results are presented in evaluations of scratch resistance, chemical resistance, coat close adhesiveness, and pencil hardness that will be described in Examples below.

### <Substrate>

The substrate is not particularly limited and may be appropriately selected depending on the intended purpose. Examples thereof include substrates made of a resin and inorganic substrates.

### <<Inorganic substrate>>

Examples of the inorganic substrate include substrates made of glass, substrates made of quartz, and substrates made of sapphire.

The substrate made of glass is not particularly limited and may be appropriately selected depending on the intended purpose. Examples thereof include silica glass (silicate glass), soda-lime glass, and potash glass.

The substrate made of glass may be tempered glass, laminated glass, and heat-resistant glass.

The substrate made of glass may be those used in applications such as window glass for automobiles, window glass for construction, lens, mirror, and goggles.

A shape of the substrate made of glass is typically a form of plate, but may be any form such as a form of sheet and a form of curvature.

### <<Substrate made of resin>>

The material of the substrate made of a resin is not particularly limited and may be appropriately selected depending on the intended purpose. Examples of the material include triacetylcellulose (TAC), polyester (TPEE), polyethylene terephthalate (PET), polyethylenenaphthalate (PEN), polyimide (PI), polyamide (PA), aramid, polyethylene (PE), polyacrylate, polyethersulfone, polysulfone, polypropylene (PP), polystyrene, diacetylcellulose, polyvinyl chloride, acrylic resins (PMMA), polycarbonate (PC), epoxy resins, urea resins, urethane resins, melamine resins, phenol resins, acrylonitrile-butadiene-styrene copolymer, cycloolefin polymer (COP), cycloolefin copolymer (COC), PC/PMMA laminate, and rubber-added PMMA.

The substrate preferably has transparency.

A shape of the substrate, which is not particularly limited and may be appropriately selected depending on the intended purpose, is preferably form of a film.

When the substrate is form of a film, an average thickness of the substrate is not particularly limited and may be appropriately selected depending on the intended purpose, but is preferably 5 µm to 1,000 µm, more preferably 50 µm to 500 µm.

On the surface of the substrate, letters, patterns, and images, etc. may be printed.

On the surface of the substrate, a binder layer may be provided in order to increase close adhesiveness between the substrate and a molding material when the anti-fogging and anti-fouling laminate is molded and processed, or in order to protect the letters, the patterns, and the images from flow pressure of the molding material during the molding and processing. As the material of the binder layer, various adhesive agents can be used in addition to various binders such as acryl-based binders, urethane-based binders, polyester-based binders, polyamide-based binders, ethylene butyl alcohol-based binders, and ethylene-vinyl-acetate-copolymer-based binders. Note that, two or more binder layers may be formed. As the binder to be used, those having heat-sensitivity and pressure-sensitivity suitable for a molding material can be selected.

A surface of the substrate opposite to the surface of the substrate at which the anti-fogging and anti-fouling layer is disposed may have wrinkle patterns. This makes it possible to prevent blocking when a plurality of the anti-fogging and anti-fouling laminates are laminated. As a result, a handling property in the post-process is improved and a product can be effectively produced.

The wrinkle patterns can be formed through, for example, emboss processing.

Here, the blocking means difficulty in pulling sheets apart when a plurality of sheets are laminated.

### <Primer layer>

The anti-fogging and anti-fouling layer does not have a sufficient close adhesiveness to the substrate. Therefore, in the anti-fogging and anti-fouling laminate, a primer layer, which improves the anti-fogging and anti-fouling layer in close adhesiveness to the substrate, is disposed between the substrate and the anti-fogging and anti-fouling layer.

When the primer layer is thin, an effect of improving close adhesiveness is insufficient. Therefore, an average thickness of the primer layer is more than 0.5 µm.

The average thickness of the primer layer is not particularly limited and may be appropriately selected depending on the intended purpose, so long as it is more than 0.5 µm. However, the average thickness is preferably 1 µm to 20 µm, more preferably 1 µm to 10 µm, particularly preferably 2 µm to 5 µm.

The average thickness of the primer layer falling within the preferable ranges hardly decreases close adhesiveness and makes it possible to prevent the anti-fogging and anti-fouling layer from being exfoliated, even when it is exposed to high-temperature vapor (for example, 60°C or more), thermal shock (for example, drastic change from -20°C to 80°C), and an alkali detergent.

The average thickness is determined through the following method.

A thickness of the anti-fogging and anti-fouling layer can be measured by observing a cross section of the anti-fogging and anti-fouling laminate with a field emission scanning electron microscope S-4700 (product name; manufactured by Hitachi High-Technologies Corporation). The measurement is performed at any 10 portions and an average value of the measurements is regarded as an average thickness.

In addition, measurement may be performed with F20 film thickness measurement system manufactured by Filmetrics.

The primer layer can be formed by, for example, coating the active energy ray curable resin composition. That is, the primer layer is a cured product obtained by, for example, curing the active energy ray curable resin composition through active energy rays. The active energy ray curable resin composition is, for example, an active energy ray curable resin composition that includes at least urethane (meth)acrylate and a photopolymerization initiator and further includes other components such as a solvent if necessary.

The urethane (meth)acrylate is not particularly limited and may be appropriately selected depending on the intended purpose. Examples thereof include aliphatic urethane (meth)acrylate and aromatic urethane (meth)acrylate. Among them, aliphatic urethane (meth)acrylate is preferable.

Specific examples of the photopolymerization initiator include specific examples of the photopolymerization initiator that will be exemplified in the description of the anti-fogging and anti-fouling layer below.

Specific examples of the solvent include specific examples of the solvent that will be exemplified in the description of the anti-fogging and anti-fouling layer below.

The active energy ray curable resin composition further preferably includes (meth)acrylate having an ethylene oxide structure. Examples of the (meth)acrylate having an ethylene oxide structure include pentaerythritol ethoxy tetra(meth)acrylate and trimethylolpropane ethoxy tri(meth)acrylate.

A method of the coating is not particularly limited and may be appropriately selected depending on the intended purpose. Examples thereof include wire bar coating, blade coating, spin coating, reverse roll coating, die coating, spray coating, roll coating, gravure coating, microgravure coating, lip coating, air knife coating, curtain coating, a comma coat method, and a dipping method.

### <Anti-fogging and anti-fouling layer>

The anti-fogging and anti-fouling layer has a coefficient of kinetic friction of 0.40 or less.

The anti-fogging and anti-fouling layer has an average thickness of 10 µm or more.

The anti-fogging and anti-fouling layer has Martens hardness of 10 N/mm² or more.

The anti-fogging and anti-fouling layer is a cured product of an active energy ray curable resin composition.

The active energy ray curable resin composition includes a hydrophilic monomer having an alkylene oxide equivalent of less than 100 and an acrylic equivalent of 200 to 500, a non-alicyclic crosslinking agent having an alkylene oxide equivalent of 100 or more and an acrylic equivalent of less than 400, and a hydrophobic monomer including at least one selected from the group consisting of fluorine and silicon.

A content of the crosslinking agent in the active energy ray curable resin composition is 5% by mass to 40% by mass relative to non-volatile matter of the active energy ray curable resin composition.

A content of the hydrophobic monomer in the active energy ray curable resin composition is 0.001% by mass to 10% by mass relative to the non-volatile matter of the active energy ray curable resin composition.

A surface of the anti-fogging and anti-fouling layer preferably has a pure water contact angle of 80° or more.

The surface of the anti-fogging and anti-fouling layer preferably has a hexadecane contact angle of 35° or more.

The anti-fogging and anti-fouling layer is disposed on the primer layer.

The anti-fogging and anti-fouling layer has a flat surface. Here, the phrase "having a flat surface" means that the surface does not have intentionally formed convex portions or concave portions. For example, regarding the anti-fogging and anti-fouling laminate, when the anti-fogging and anti-fouling layer is formed (when the cured product is formed), fine convex portions or concave portions formed through a physical processing are not formed on the surface.

When the surface of the anti-fogging and anti-fouling layer does not have fine convex portions or concave portions, aqueous stains and/or oily stains (e.g., ink of permanent markers, finger prints, sweat, and cosmetics such as foundation cosmetics and UV protectors) hardly adhere to the surface of the anti-fogging and anti-fouling layer. In addition, even if these stains adhere thereto, the stains can be easily removed with a sheet of tissue paper.

### <<Martens hardness>>

The Martens hardness of the anti-fogging and anti-fouling layer can be measured with PICODENTOR HM500 (product name; manufactured by Fischer Instruments). In that case, the measurement is performed with a diamond cone as a needle under the following conditions: load of 1 mN/20 s; and a face angle of 136°.

The Martens hardness of the anti-fogging and anti-fouling layer is 10 N/mm² or more, preferably 20 N/mm² or more. When the Martens hardness is less than 10 N/mm², the anti-fogging and anti-fouling layer is easily scratched.

The upper limit of the Martens hardness of the anti-fogging and anti-fouling layer is not particularly limited and may be appropriately selected depending on the intended purpose. However, examples of the Martens hardness of the anti-fogging and anti-fouling layer include 40 N/mm² or less, 50 N/mm² or less, and 100 N/mm² or less.

### <<Coefficient of kinetic friction>>

The coefficient of kinetic friction is determined through the following method.

The coefficient of kinetic friction is measured with Triboster TS501 (product name; manufactured by Kyowa Interface Science Co., Ltd). BEMCOT (Registered Trademark) M-3II (product name; manufactured by Asahi Kasei Corp.) is attached to a surface contact probe with pieces of double sided tape and the measurement is performed at any 12 portions under the following conditions: a measurement load of 50 g/cm², a measurement speed of 1.7 mm/s, and a measurement distance of 20 mm. An average value of the measurements is regarded as the coefficient of kinetic friction.

The coefficient of kinetic friction of the anti-fogging and anti-fouling layer is 0.40 or less, preferably 0.37 or less, more preferably 0.30 or less. When the coefficient of kinetic friction is 0.40 or less, slipperiness of a material to be wiped is favorable, and the material is easily wiped even when stains are attached thereto. In addition, an effect of releasing a force is achieved, which hardly scratches the anti-fogging and anti-fouling layer.

The lower limit of the coefficient of kinetic friction of the anti-fogging and anti-fouling layer is not particularly limited and may be appropriately selected depending on the intended purpose. However, the coefficient of kinetic friction of the anti-fogging and anti-fouling layer is preferably, for example, 0.10 or more.

### <<Average thickness>>

An average thickness is determined through the following method.

A thickness of the anti-fogging and anti-fouling layer can be measured by observing a cross section of the anti-fogging and anti-fouling laminate with a field emission scanning electron microscope S-4700 (product name; manufactured by Hitachi High-Technologies Corporation). The measurement is performed at any 10 portions and an average value of the measurements is regarded as an average thickness.

In addition, measurement may be performed with F20 film thickness measurement system manufactured by Filmetrics.

In order to suppress cloudiness for a certain time or longer (e.g., 10 minutes or longer) in an atmosphere of high temperature and high humidity conditions (e.g., 35°C and 85% RH), it is effective to set a thickness of the anti-fogging and anti-fouling layer to a certain value or higher.

In terms of the above, an average thickness of the anti-fogging and anti-fouling layer is 10 µm or more, preferably 20 µm or more, more preferably 26 µm or more.

The anti-fogging and anti-fouling layer having a high average thickness does not adversely affect a high resilient property thereof when receiving deformation by pressure applied upon wiping. Therefore, the average thickness thereof is not particularly limited and may be appropriately selected depending on the intended purpose. The upper limit of the average thickness of the anti-fogging and anti-fouling layer is not particularly limited and may be appropriately selected depending on the intended purpose. The average thickness is, for example, 30 µm or less, 40 µm or less, and 100 µm or less.

### <<Pure water contact angle>>

A pure water contact angle of the surface of the anti-fogging and anti-fouling layer is preferably 80° or more, more preferably 90° or more, particularly preferably 100° or more. The upper limit of the pure water contact angle is not particularly limited and may be appropriately selected depending on the intended purpose. The pure water contact angle is, for example, 130° or less, 150° or less, and 170° or less.

The pure water contact angle is measured with a contact angle meter: PCA-1 (manufactured by Kyowa Interface Science Co., Ltd) under the following conditions. Distilled water is charged into a plastic syringe and a stainless needle is attached to a tip thereof. Then, the distilled water is added dropwise to a surface to be evaluated (the surface of the anti-fogging and anti-fouling layer).
Amount of water added dropwise: 2 µL
Measurement temperature: 25°C

A contact angle 5 seconds after water is added dropwise is measured at any 10 portions on the surface of the anti-fogging and anti-fouling layer and an average value of the measurements is regarded as the pure water contact angle.

### <<Hexadecane contact angle>>

A hexadecane contact angle of the surface of the anti-fogging and anti-fouling layer is preferably 35° or more, more preferably 40° or more, particularly preferably 60° or more. The upper limit of the hexadecane contact angle is not particularly limited and may be appropriately selected depending on the intended purpose. The pure water contact angle is, for example, 100° or less, 120° or less, and 150° or less.

The hexadecane contact angle is measured with a contact angle meter: PCA-1 (manufactured by Kyowa Interface Science Co., Ltd) under the following conditions. Hexadecane is charged into a plastic syringe and a Teflon-coated stainless needle is attached to a tip thereof. Then, hexadecane is added dropwise to a surface to be evaluated (the surface of the anti-fogging and anti-fouling layer).
Amount of hexadecane added dropwise: 1 µL
Measurement temperature: 25°C

A contact angle 20 seconds after hexadecane is added dropwise is measured at any 10 portions on the surface of the anti-fogging and anti-fouling layer and an average value of the measurements is regarded as the hexadecane contact angle.

In the case where the pure water contact angle falls within the aforementioned preferable ranges and the hexadecane contact angle falls within the aforementioned preferable ranges, even when aqueous stains and/or oily stains (e.g., ink of permanent markers, finger prints, sweat, and cosmetics such as foundation cosmetics and UV protectors) are attached, it is possible to prevent these stains from permeating through under layers of the bulk, resulting in an excellent fouling property as well as an excellent anti-fogging property.

### <<Active energy ray curable resin composition>>

The anti-fogging and anti-fouling layer is a cured product of an active energy ray curable resin composition.

The active energy ray curable resin composition includes a hydrophilic monomer, a crosslinking agent, and a hydrophobic monomer, and further includes other components such as a photopolymerization initiator and a solvent if necessary.

### -Hydrophilic monomer-

The hydrophilic monomer has an alkylene oxide equivalent of less than 100 and an acrylic equivalent of 200 to 500.

Here, the alkylene oxide equivalent is mass of monomer per 1 mol of the alkylene oxide group and is obtained by dividing a molecular weight of the monomer into the number of alkylene oxides per one molecule of the monomer.

The acrylic equivalent is mass of monomer per 1 mol of the (meth)acrylic group and is obtained by dividing a molecular weight of the monomer into the number of (meth)acrylic groups [may be referred to as (meth)acryloyl group] per one molecule of the monomer.

The number of carbon atoms of the alkylene group in the alkylene oxide is preferably 1 to 12, more preferably 1 to 4.

Examples of the alkylene oxide include methylene oxide (the number of carbon atoms: 1), 1,2-ethylene oxide (the number of carbon atoms: 2), 1,3-propylene oxide (the number of carbon atoms: 3), 1,2-propylene oxide (the number of carbon atoms: 3), and 1,4-butylene oxide (the number of carbon atoms: 4).

The lower limit of the alkylene oxide equivalent in the hydrophilic monomer is not particularly limited and may be appropriately selected depending on the intended purpose. Examples of the alkylene oxide equivalent include 30 or more and 40 or more.

The hydrophilic monomer includes a (meth)acryloyl group. The number of the (meth)acryloyl groups in the hydrophilic monomer is not particularly limited and may be appropriately selected depending on the intended purpose. However, the number thereof is preferably 2 to 6, more preferably 2 to 4.

The (meth)acryloyl group means an acryloyl group or a methacryloyl group.

The hydrophilic monomer is not particularly limited and may be appropriately selected depending on the intended purpose so long as it has an alkylene oxide equivalent of less than 100 and an acrylic equivalent of 200 to 500. Examples thereof include alkoxylated trimethylolpropane tri(meth)acrylate, alkoxylated glycerin tri(meth)acrylate, alkoxylated pentaerythritol tetra(meth)acrylate, and polyalkylene glycol di(meth)acrylate.

A molecular weight of the hydrophilic monomer is not particularly limited and may be appropriately selected depending on the intended purpose. The molecular weight thereof is preferably 300 to 2,500, more preferably 400 to 2,000, particularly preferably 600 to 1,500.

A content of the hydrophilic monomer in the active energy ray curable resin composition is not particularly limited and may be appropriately selected depending on the intended purpose. The content thereof is preferably 55% by mass to 90% by mass relative to non-volatile matter of the active energy ray curable resin composition. When the content thereof falls within the preferable range, the anti-fogging and anti-fouling layer is hardly clouded and scratched. As a result, the anti-fogging and anti-fouling layer is hardly attacked by chemicals.

### -Crosslinking agent-

Unlike the hydrophilic monomer, the crosslinking agent has an alkylene oxide equivalent of 100 or more. In addition, the crosslinking agent has an acrylic equivalent of less than 400.

In the present invention, a crosslinking agent having no alkylene oxide is included in the crosslinking agent.

The crosslinking agent is a non-alicyclic crosslinking agent. That is, the crosslinking agent has no alicyclic structure. The alicyclic structure is a ring structure including three or more carbon atoms.

Examples of the alkylene oxide include ethylene oxide and 1,2-propylene oxide.

The lower limit of the acrylic equivalent in the crosslinking agent is not particularly limited and may be appropriately selected depending on the intended purpose. Examples of the acrylic equivalent include 100 or more.

The crosslinking agent includes a (meth)acryloyl group. The number of the (meth)acryloyl groups in the crosslinking agent is not particularly limited and may be appropriately selected depending on the intended purpose. However, the number thereof is preferably 2 to 6.

The crosslinking agent is not particularly limited and may be appropriately selected depending on the intended purpose, so long as it has an alkylene oxide equivalent of 100 or more and an acrylic equivalent of less than 400. Examples thereof include pentaerythritol alkoxy tetra(meth)acrylate, aliphatic urethane (urethane)acrylate, and ethoxylated bisphenol-A diacrylate.

A molecular weight of the crosslinking agent is not particularly limited and may be appropriately selected depending on the intended purpose. However, the molecular weight thereof is preferably 300 to 2,500, more preferably 400 to 2,000, more preferably 500 to 1,900.

A content of the crosslinking agent in the active energy ray curable resin composition is 5% by mass to 40% by mass, preferably 20% by mass to 35% by mass, particularly preferably 20% by mass to 30% by mass, relative to the non-volatile matter of the active energy ray curable resin composition. When the content thereof is less than 5% by mass, scratch resistance and chemical resistance are deteriorated. When the content thereof is more than 40% by mass, an anti-fogging property is deteriorated.

Here, some examples of the hydrophilic monomer and the crosslinking agent, alkylene oxide equivalents thereof, and acrylic equivalents thereof will be described below.

**Table 1**

| | Monomer | Molecular weight | Number of AO group per one molecule | Number of acrylic group per one molecule | AO equivalent | Acrylic equivalent |
|---|---|---|---|---|---|---|
| Hydrophilic monomer | SR9035 | 956 | 15 | 3 | 63.7 | 318.7 |
| | ATM-35E | 1892 | 35 | 4 | 54.1 | 473 |
| | A-GLY-20E | 1295 | 20 | 3 | 64.8 | 431.7 |
| | A-600 | 708 | 14 | 2 | 50.6 | 354.0 |
| | A-GLY-9E | 811 | 9 | 3 | 90.1 | 270.3 |
| | A-400 | 508 | 9 | 2 | 56.4 | 254.0 |
| Crosslinking agent | EBECRYL40 | 571 | 4 | 4 | 142.8 | 142.8 |
| | PU610 | 1800 | 0 | 6 | - | 300.0 |
| | ABE-300 | 466 | 3 | 2 | 155.3 | 233.0 |
| Others | A-1000 | 1108 | 23 | 2 | 48.2 | 554.0 |
| | A-DCP | 304 | 0 | 2 | - | 152 |

| | | | | | | |
|---|---|---|---|---|---|---|
| The "AO" in Table 1 represents alkylene oxide. | | | | | | |

Details of the monomers described in Table 1 are as follows.

### [Hydrophilic monomer]

• SR9035: Ethoxylated (15) trimethylolpropane triacrylate, manufactured by SARTOMER

Note that, (15) means an average number of ethylene oxide groups contained per one mole is 15.
- ATM-35E: Ethoxylated pentaerythritol tetraacrylate, manufactured by Shin Nakamura Chemical Co., Ltd.
- A-GLY-20E: Ethoxylated glycerin triacrylate, manufactured by Shin Nakamura Chemical Co., Ltd.
- A-600: Polyethylene glycol diacrylate, manufactured by Shin Nakamura Chemical Co., Ltd.
- A-GLY-9E: Ethoxylated glycerin triacrylate, manufactured by Shin Nakamura Chemical Co., Ltd.
- A-400: Polyethylene glycol diacrylate, manufactured by Shin Nakamura Chemical Co., Ltd.

### [Crosslinking agent]

- EBECRYL40: Pentaerythritol alkoxy tetraacrylate, manufactured by DAICEL-ALLNEX LTD.
- PU610: Aliphatic urethane acrylate (the numeber of acrylic groups: 6, molecular weight: 1800), manufactured by Miwon
- ABE-300: Ethoxylated bisphenol-A diacrylate, manufactured by Shin Nakamura Chemical Co., Ltd.

### [Others]

- A-1000: Polyethylene glycol diacrylate, manufactured by Shin Nakamura Chemical Co., Ltd.
- A-DCP: Tricyclodecane dimethanol diacrylate, manufactured by Shin Nakamura Chemical Co., Ltd.

### -Hydrophobic monomer-

Unlike the hydrophilic monomer and the crosslinking agent, the hydrophobic monomer includes at least one selected from the group consisting of fluorine and silicon.

In other words, the hydrophobic monomer includes at least one selected from the group consisting of fluorine and silicon, while the hydrophilic monomer and the crosslinking agent include neither fluorine nor silicon.

The hydrophobic monomer includes, for example, a fluoroalkyl group, a fluoroalkyl ether group, and a dimethylsiloxane group.

The hydrophobic monomer includes a (meth)acryloyl group. The number of the (meth)acryloyl groups in the hydrophobic monomer is not particularly limited and may be appropriately selected depending on the intended purpose. However, the number thereof is preferably 2 to 6.

Examples of the hydrophobic monomer include fluorinated (meth)acrylate having a fluoroalkyl group or a fluoroalkyl ether group and silicone (meth)acrylate having a dimethylsiloxane group.

Examples of commercially available products of the fluorinated (meth)acrylate include KY-1200 series manufactured by Shin-Etsu Chemical Co., Ltd., MEGAFACE RS series manufactured by DIC CORPORATION, and OPTOOL DAC manufactured by DAIKIN INDUSTRIES, LTD.

Examples of commercially available products of the silicone (meth)acrylate include X-22-164 series manufactured by Shin-Etsu Chemical Co., Ltd. and TEGO Rad series manufactured by Evonik Co.

A molecular weight of the hydrophobic monomer is not particularly limited and may be appropriately selected depending on the intended purpose.

A content of the hydrophobic monomer in the active energy ray curable resin composition is 0.001% by mass to 10% by mass, preferably 0.001% by mass to 5.0% by mass, more preferably 0.01% by mass to 5.0% by mass, particularly preferably 0.01% by mass to 4.0% by mass, relative to the non-volatile matter of the active energy ray curable resin composition. When the amount thereof is less than 0.001% by mass, the fouling property is deteriorated. When the content thereof is more than 10% by mass, the anti-fogging and anti-fouling layer is deteriorated in appearance (loss of brightness and cloudiness).

### -Photopolymerization initiator-

Examples of the photopolymerization initiator include photoradical polymerization initiators, photo-acid generating agents, bisazido compounds, hexamethoxymethylmelamine, and tetramethoxy glycoluril.

The photoradical polymerization initiator is not particularly limited and may be appropriately selected depending on the intended purpose. Examples thereof are presented as follows.
- 1-Hydroxy-cyclohexyl-phenyl-ketone
- 2-Hydroxy-1-{4-[4-(2-hydroxy-2-methyl-propionyl)-benzil]phenyl}-2-methyl-propan-1-one
- 2,2-Dimethoxy-1,2-diphenylethan-1-one
- 2-Hydroxy-2-methyl-1-phenyl-propan-1-one
- 1-[4-(2-Hydroxy-ethoxy)-phenyl]-2-hydroxy-2-methyl-1-propan-1-one
- Blend of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester
- 2,4,6-Trimethylbenzoyl-diphenyl-phosphine oxide

The photopolymerization initiator preferably includes no nitrogen atom as a constituent element in order to prevent yellowing in appearance.

Meanwhile, in order to prevent yellowing in appearance, the photopolymerization initiator preferably includes only C, H, and O, or only C, H, P, and O, as constituent elements.

A content of the photopolymerization initiator in the active energy ray curable resin composition is not particularly limited and may be appropriately selected depending on the intended purpose. However, the content thereof is preferably 0.1% by mass to 10% by mass, more preferably 0.1% by mass to 5% by mass, particularly preferably 1% by mass to 5% by mass.

### -Solvent-

The solvent is not particularly limited and may be appropriately selected depending on the intended purpose. Examples thereof include organic solvents.

Examples of the organic solvent include aromatic solvents, alcohol solvents, ester solvents, ketone solvents, glycol ether solvents, glycol ether ester solvents, chlorine solvents, ether solvents, N-methylpyrrolidone, dimethylformamide, dimethylsulfoxide, and dimethylacetamide.

As the solvent, a solvent having a boiling point of 80°C or more is preferable for the purpose of obtaining an anti-fogging and anti-fouling layer having more excellent appearance.

Examples of the solvent having a boiling point of 80°C or more include 1-propanol, 2-propanol, 1-butanol, 2-butanol, 2-methyl-2-propanol, 1,3-butanediol, 1,4-butanediol, 2-ethyl-1-hexanol, n-propyl acetate, isopropyl acetate, butyl acetate, methyl isobutyl ketone, cyclohexanone, diisobutyl ketone, diacetone alcohol, propylene glycol monomethylether, methyl cellosolve, ethyl cellosolve, butyl cellosolve, 1,4-dioxane, methyl carbitol, ethyl carbitol, butyl carbitol, ethyl carbitol acetate, and butyl carbitol acetate.

A content of the solvent in the active energy ray curable resin composition is not particularly limited and may be appropriately selected depending on the intended purpose.

The active energy ray curable resin composition is cured by irradiation of active energy rays. The active energy rays are not particularly limited and may be appropriately selected depending on the intended purpose. Examples thereof include electron beams, UV rays, infrared rays, laser beams, visible rays, ionizing radiation (e.g., X rays, α rays, β rays, γ rays), microwave, and high-frequency wave.

When the anti-fogging and anti-fouling laminate is evaluated for an anti-fogging property through an evaluation method below, a result of the anti-fogging property is preferably A.

### <Evaluation method of anti-fogging property>

After left to stand for 2 hours under an environment of normal temperature, the anti-fogging and anti-fouling laminate is exposed to a high temperature and high humidity environment of 35°C and 85% RH for 15 minutes. Then, a surface of the anti-fogging and anti-fouling laminate is visually observed during exposure to the high temperature and high humidity environment and is evaluated for the anti-fogging property based on evaluation criteria below.

### [Evaluation criteria]

A: Until 15 minutes after, an area of the anti-fogging and anti-fouling laminate that exhibits fogging is 30% or less.
B: Until 10 minutes after, an area of the anti-fogging and anti-fouling laminate that exhibits fogging is 30% or less.
C: Until 5 minutes after, an area of the anti-fogging and anti-fouling laminate that exhibits fogging is 30% or less.
D: In 5 minutes, an area of the anti-fogging and anti-fouling laminate that exhibits fogging is more than 30%.

When the active energy ray curable resin composition includes the hydrophobic monomer and the hydrophilic monomer, the low-surface-energy components are localized on the surface of the anti-fogging and anti-fouling layer obtained, and the hydrophilic components (water-absorbable components) are present inside the anti-fogging and anti-fouling layer. As a result, water droplets are easily repelled on the surface of the anti-fogging and anti-fouling layer, and water vapor is easily trapped inside the anti-fogging and anti-fouling layer, which makes it possible to achieve more excellent anti-fogging property.

A method for producing the anti-fogging and anti-fouling laminate is not particularly limited and may be appropriately selected depending on the intended purpose. The anti-fogging and anti-fouling layer is preferably obtained by irradiating an uncured layer formed of the active energy ray curable resin composition with ultraviolet rays under an atmosphere having an oxygen concentration of less than 0.1% by volume. This makes the curing ability excellent. As a result, an anti-fogging and anti-fouling layer having a low coefficient of kinetic friction and a high contact angle can be obtained.

Examples of the atmosphere having an oxygen concentration of less than 0.1% by volume include inert gas atmospheres such as nitrogen atmosphere.

Here, one example of the anti-fogging and anti-fouling laminate will be described.

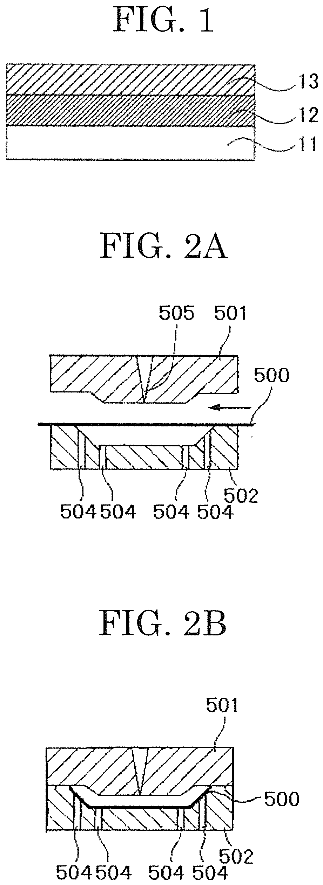

FIG. 1 is a schematic cross-sectional view of one example of the anti-fogging and anti-fouling laminate of the present invention.

The anti-fogging and anti-fouling laminate of FIG. 1 includes a substrate made of a resin 11, a primer layer 12, and an anti-fogging and anti-fouling layer 13.

### (Method for producing anti-fogging and anti-fouling laminate)

A method of the present invention for producing an anti-fogging and anti-fouling laminate includes at least an anti-fogging and anti-fouling layer forming step, preferably includes a primer layer forming step, and further includes other steps if necessary.

The method for producing an anti-fogging and anti-fouling laminate is a suitable method of the present invention for producing the anti-fogging and anti-fouling laminate.

### <Primer layer forming step>

The primer layer forming step is not particularly limited and may be appropriately selected depending on the intended purpose, so long as it is a step of forming the primer layer. Examples thereof include a step of coating, on the substrate, an active energy ray curable resin composition for forming a primer layer and irradiating it with ultraviolet rays, to form the primer layer.

### <Anti-fogging and anti-fouling layer forming step>

The anti-fogging and anti-fouling layer forming step is not particularly limited and may be appropriately selected depending on the intended purpose, so long as it is a step of irradiating, with ultraviolet rays, un uncured layer formed of the active energy ray curable resin composition on the primer layer under an atmosphere having an oxygen concentration of less than 0.1% by volume, to form the anti-fogging and anti-fouling layer.

By performing irradiation of ultraviolet rays under the atmosphere having an oxygen concentration of less than 0.1% by volume when the anti-fogging and anti-fouling layer is formed, the curing ability becomes excellent. As a result, an anti-fogging and anti-fouling layer having a low coefficient of kinetic friction and a high contact angle can be obtained.

Examples of the atmosphere having an oxygen concentration of less than 0.1% by volume include inert gas atmospheres such as nitrogen atmosphere.

### (Active energy ray curable resin composition)

An active energy ray curable resin composition of the present invention includes at least a hydrophilic monomer, a hydrophobic monomer, a crosslinking agent, and a photopolymerization initiator, and further includes other components such as a solvent if necessary.

Details of the hydrophilic monomer, the hydrophobic monomer, the crosslinking agent, the photopolymerization initiator, and the solvent are the same as the details of the hydrophilic monomer, the hydrophobic monomer, the crosslinking agent, the photopolymerization initiator, and the solvent in the description of the anti-fogging and anti-fouling layer of the anti-fogging and anti-fouling laminate. In addition, preferable embodiments thereof are the same as well.

A surface of an anti-fogging and anti-fouling layer having a flat surface, which is obtained by curing the active energy ray curable resin composition through active energy rays, preferably has Martens hardness of 10 N/mm² or more.

The surface of the anti-fogging and anti-fouling layer preferably has a coefficient of kinetic friction of 0.40 or less.

The surface of the anti-fogging and anti-fouling layer preferably has a pure water contact angle of 80° or more and preferably has a hexadecane contact angle of 35° or more.

Measurement methods and preferable ranges of the Martens hardness, the coefficient of kinetic friction, the pure water contact angle, and the hexadecane contact angle are the same as the measurement methods and preferable ranges in the description of the anti-fogging and anti-fouling layer.

### (Product)

A product of the present invention includes the anti-fogging and anti-fouling laminate of the present invention on a surface thereof and further includes other members if necessary.

The product is not particularly limited and may be appropriately selected depending on the intended purpose. Examples thereof include glass windows, refrigerating/freezing show cases, window materials for automobile windows, bath mirrors, mirrors such as automobile side mirrors, floors and walls of bath rooms, solar battery panels, and crime prevention monitoring cameras.

The product may be a pair of glasses, goggles, helmets, lenses, microlens arrays, and headlight covers, front panels, side panels, and rear panels of automobiles. These are preferably formed by in-mold forming, insert molding, or overlay molding.

The anti-fogging and anti-fouling laminate may be formed on a part or the whole of the surface of the product.

A method for producing the product is not particularly limited and may be appropriately selected depending on the intended purpose. However, the method for producing the product of the present invention that will be described later is preferable.

### (Method for producing product)

The method for producing the product of the present invention includes at least a heating step, and an anti-fogging and anti-fouling laminate molding step, and further includes other steps (injection molding step, cast molding step, etc.) if necessary.

The method for producing the product is the method for producing the product of the present invention.

### <Heating step>

The heating step is not particularly limited and may be appropriately selected depending on the intended purpose so long as it is a step of heating an anti-fogging and anti-fouling laminate.

The anti-fogging and anti-fouling laminate is the anti-fogging and anti-fouling laminate of the present invention.

The heating is not particularly limited and may be appropriately selected depending on the intended purpose. However, heating through infrared rays or exposure to a high temperature atmosphere is preferable.

A temperature of the heating is not particularly limited and may be appropriately selected depending on the intended purpose. However, the temperature of the heating is preferably near a glass transition temperature of the substrate made of a resin or the glass transition temperature or higher.

The heating time is not particularly limited and may be appropriately selected depending on the intended purpose.

### <Anti-fogging and anti-fouling laminate molding step>

The anti-fogging and anti-fouling laminate molding step is not particularly limited and may be appropriately selected depending on the intended purpose so long as it is a step of molding the heated anti-fogging and anti-fouling laminate into a desired shape. The anti-fogging and anti-fouling laminate molding step is, for example, a step of bringing the laminate into contact with a predetermined mold and molding the laminate into a desired shape by application of air pressure.

### <Injection molding step>

After the anti-fogging and anti-fouling laminate molding step, an injection molding step may be performed if necessary.

The injection molding step is not particularly limited and may be appropriately selected depending on the intended purpose so long as it is a step of injecting a molding material onto a substrate made of a resin of the anti-fogging and anti-fouling laminate molded into a desired shape and molding the molding material.

Examples of the molding material include resins. Examples of the resin include olefin resins, styrene resins, ABS resins (acrylonitrile-butadiene-styrene copolymers), AS resins (acrylonitrile-styrene copolymers), acrylic resins, urethane resins, unsaturated polyester resins, epoxy resins, polyphenylene oxide/polystyrene resins, polycarbonates, polycarbonate-modified polyphenylene ethers, polyethylene terephthalates, polysulfones, polyphenylene sulfides, polyphenylene oxides, polyetherimides, polyimides, polyamides, liquid crystal polyesters, polyallyl heat-resistant resins, various types of complex resins, and various types of modified resins.

A method of the injection is not particularly limited and may be appropriately selected depending on the intended purpose. Examples of the method of the injection include a method by injecting the molten molding material to a substrate made of a resin of the anti-fogging and anti-fouling laminate that has closely adhered to a predetermined die.

### <Cast molding step>

After the anti-fogging and anti-fouling laminate molding step, a cast molding step may be performed if necessary.

The cast molding step is not particularly limited and may be appropriately selected depending on the intended purpose, so long as it is the following step. That is, resin materials dissolved in a solution are charged into a side of the substrate made of a resin of the anti-fogging and anti-fouling laminate, which is molded into a desired shape. Then, the resin materials are solidified to perform the molding.

The method for producing the product is preferably performed by use of an in-mold forming apparatus, an insert-molding apparatus, or an overlay molding apparatus.

Here, an example of the method for producing the product of the present invention will be described with reference to the accompanying drawings. The production method is a production method using an in-mold forming apparatus.

First, an anti-fogging and anti-fouling laminate 500 is heated. The heating is preferably performed by heating through infrared rays or exposure to a high temperature atmosphere.

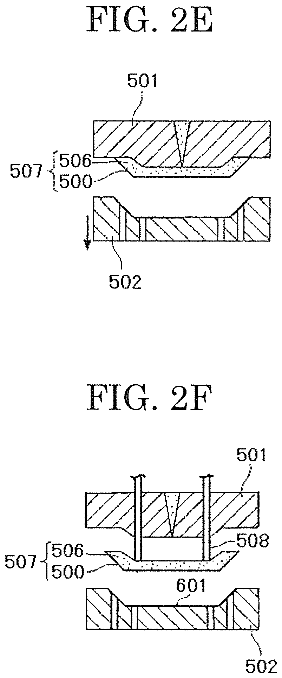

Then, as illustrated in FIG. 2A, the anti-fogging and anti-fouling laminate 500 heated is disposed at a predetermined position between a first mold 501 and a second mold 502 in such a manner that the substrate made of a resin of the anti-fogging and anti-fouling laminate 500 faces the first mold 501 and the anti-fogging and anti-fouling layer faces the second mold 502. In FIG. 2A, the first mold 501 is immovable, while the second mold 502 is movable.

After the anti-fogging and anti-fouling laminate 500 is disposed between the first mold 501 and the second mold 502, the first mold 501 and the second mold 502 are clamped. Subsequently, the anti-fogging and anti-fouling laminate 500 is attracted to a suction hole 504 opened in a cavity surface of the second mold 502 to fit the anti-fogging and anti-fouling laminate 500 along the cavity surface of the second mold 502. In this manner, the anti-fogging and anti-fouling laminate 500 is shaped on the cavity surface. At this time, the periphery of the anti-fogging and anti-fouling laminate 500 may be immobilized by a film pressor mechanism (not illustrated) to thereby perform positioning. Thereafter, unnecessary portions of the anti-fogging and anti-fouling laminate 500 are trimmed off (FIG. 2B).

Note that, when the second mold 502 has no suction hole 504 and the first mold 501 has a compressed air hole (not illustrated), compressed air is fed through the compressed air hole of the first mold 501 toward the anti-fogging and anti-fouling laminate 500 to fit the anti-fogging and anti-fouling laminate 500 along the cavity surface of the second mold 502.

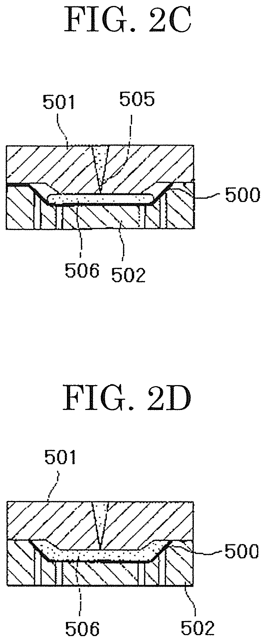

Subsequently, toward the substrate made of a resin of the anti-fogging and anti-fouling laminate 500, a molten molding material 506 is injected from a gate 505 of the first mold 501 and is injected into the cavity that is formed by clamping the first mold 501 and the second mold 502 (FIG. 2C). In this manner, the cavity is filled with the molten molding material 506 (FIG. 2D). After completion of filling the molten molding material 506, the molten molding material 506 is cooled to a predetermined temperature and is solidified.

Thereafter, the second mold 502 is moved to separate the first mold 501 and the second mold 502 (FIG. 2E). In this manner, the anti-fogging and anti-fouling laminate 500 is formed on the surface of the molding material 506 and a product 507 molded into a desired shape by in-mold forming can be obtained.

Finally, the obtained product 507 is pushed out by ejection pins 508 from the first mold 501 to remove the product 507.

The production method using the overlay molding apparatus is as follows. This is a process of directly decorating the anti-fogging and anti-fouling laminate on the surface of a molding material. One example thereof is, for example, TOM (three dimension overlay method). Next, one example of the method for producing the product of the present invention using the TOM will be described below.

First, in both spaces of an apparatus that are partitioned by the anti-fogging and anti-fouling laminate fixed on a fixing frame, air is suctioned by, for example, a vacuum pump to perform vacuum drawing in the both spaces.

At this time, a molding material previously formed by injection molding is placed in one of the spaces. At the same time, the anti-fogging and anti-fouling laminate is heated with an infrared heater until the temperature reaches a predetermined temperature at which the anti-fogging and anti-fouling laminate is softened. At the timing when the anti-fogging and anti-fouling laminate is heated to be soften, the anti-fogging and anti-fouling laminate is allowed to closely adhere to the three dimensional shape of the molding material under a vacuum atmosphere by feeding air into the space of the apparatus where there is no molding material. If necessary, pressing with compressed air from a side where the air is fed may be further used in combination. After the anti-fogging and anti-fouling laminate is allowed to closely adhere to the molding product, the resultant decorated molding product is removed from the fixing frame. This vacuum molding is performed generally at 80°C to 200°C, preferably at about 110°C to about 160°C.

Upon overlay molding, in order to achieve adhesion between the anti-fogging and anti-fouling laminate and the molding material, an adhesive layer may be provided on a surface opposite to the surface of the anti-fogging and anti-fouling layer of the anti-fogging and anti-fouling laminate. The adhesive layer is not particularly limited and may be appropriately selected depending on the intended purpose. Examples of the adhesive layer include acrylic adhesive agents and hotmelt adhesive agents. A method for forming the adhesive layer is not particularly limited and may be appropriately selected depending on the intended purpose. Examples thereof include a method for forming the adhesive layer by forming the anti-fogging and anti-fouling layer on the substrate made of a resin and then coating a coating liquid for the adhesive layer at a side opposite to the side of the anti-fogging and anti-fouling layer of the anti-fogging and anti-fouling laminate. In addition, the adhesive layer may be laminated on the substrate made of a resin by coating a coating liquid for the adhesive layer on an exfoliation sheet to form the adhesive layer and then laminating the substrate made of a resin and the adhesive layer on the exfoliation sheet.

Here, an example of the product of the present invention will be described with reference to the drawings.

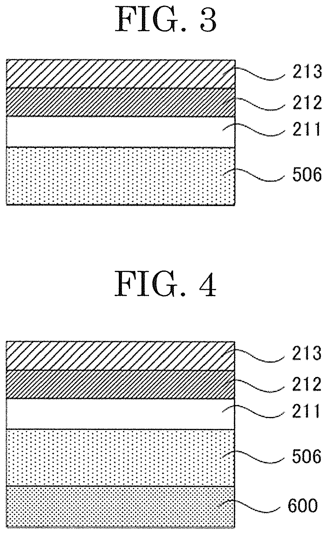

FIG. 3 to FIG. 6 are each a schematic cross-sectional view of an example of the product of the present invention.

The product of FIG. 3 includes a molding material 506, a substrate made of a resin 211, a primer layer 212, and an anti-fogging and anti-fouling layer 213, where the substrate made of a resin 211, the primer layer 212, and the anti-fogging and anti-fouling layer 213 are laminated on the molding material 506 in this order.

This product can be produced by, for example, insert molding.

The product of FIG. 4 includes a molding material 506, a substrate made of a resin 211, a primer layer 212, an anti-fogging and anti-fouling layer 213, and a hard coat layer 600, where the substrate made of a resin 211, the primer layer 212, and the anti-fogging and anti-fouling layer 213 are laminated on the molding material 506 in this order. The hard coat layer 600 is formed at a side of the molding material 506 opposite to the side of the molding material 506 at which the substrate made of a resin 211 is laminated.

This product can be produced by the following method. Specifically, after the product of FIG. 3 is produced, a productive layer is formed on the anti-fogging and anti-fouling layer 213. Then, the hard coat layer 600 is formed on a surface of the molding material 506 by immersing the molding material 506 in a hard coat solution and then drying and coating it. Moreover, the protective layer is exfoliated to form the product of FIG. 4. Note that, when the anti-fogging and anti-fouling layer has a flat surface and has both a pure water contact angle of more than 80° and a hexadecane contact angle of more than 35°, the anti-fogging and anti-fouling layer repels the hard coat solution. Therefore, the hard coat is not formed on the anti-fogging and anti-fouling layer even when the protective layer is not formed thereon. Then, the hard coat layer 600 is formed only on a side of the molding material 506 opposite to the side of the molding material 506 at which the substrate made of a resin 211 is laminated. As a result, the product is excellent in productivity.

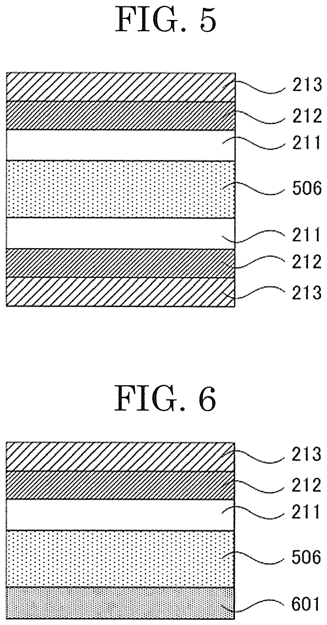

The product of FIG. 5 includes a molding material 506, substrates made of a resin 211, primer layers 212, and anti-fogging and anti-fouling layers 213, where each of the substrates made of a resin 211, each of the primer layers 212, and each of the anti-fogging and anti-fouling layers 213 are laminated on both sides of the molding material 506 in this order.

The product of FIG. 6 includes a molding material 506, a substrate made of a resin 211, a primer layer 212, an anti-fogging and anti-fouling layer 213, and an optical film 601, where the substrate made of a resin 211, the primer layer 212, the anti-fogging and anti-fouling layer 213 are laminated on the molding material 506 in this order. The optical film 601 is formed at a side of the molding material 506 opposite to the side of the molding material 506 at which the substrate made of a resin 211 is laminated. Examples of the optical film 601 include a hard coat film, an anti-reflection film, an anti-glare film, and a polarizing film.

The product illustrated in FIG. 5 or FIG. 6 can be produced by, for example, double insert molding. The double insert molding is a method for molding an integrated product where films are laminated on both surfaces, and can be performed using, for example, the method described in Japanese Patent Application Laid-Open No. 03-114718.

### (Anti-fogging method)

### <Anti-fogging method (part 1)>

One aspect of an anti-fogging method of the present invention is an anti-fogging method for improving an anti-fogging property of the anti-fogging and anti-fouling layer by warming the anti-fogging and anti-fouling laminate of the present invention to a temperature equal to or higher than normal temperature.

By warming the anti-fogging and anti-fouling layer to a temperature equal to or higher than normal temperature, a fogging property is improved, and cloudiness of the anti-fogging and anti-fouling layer can be prevented for a certain time or longer.

It is believed that the reason why the anti-fogging property is improved through warming is because the warming suppresses condensation on the surface of the anti-fogging and anti-fouling layer and moisture is effectively repeatedly absorbed and released.

Examples of the method of the warming include a method by maintaining an atmosphere to 30°C or more and a method by applying hot water of 30°C or more to the anti-fogging and anti-fouling layer.

### <Anti-fogging method (part 2)>

Another aspect of the anti-fogging method of the present invention is an anti-fogging method for maintaining an anti-fogging property of the anti-fogging and anti-fouling layer, by cleaning the anti-fogging and anti-fouling layer of the anti-fogging and anti-fouling laminate of the present invention.

When water scale or oily stains are attached on the surface of the anti-fogging and anti-fouling layer, the anti-fogging property is deteriorated. Therefore, by cleaning the anti-fogging and anti-fouling layer, the anti-fogging property of the anti-fogging and anti-fouling layer can be maintained.

A method of the cleaning is not particularly limited and may be appropriately selected depending on the intended purpose. Examples thereof include a method of the cleaning by wiping it with a sponge. Examples of the sponge include commercially available urethane sponges and melamine sponges. When the sponge is used for the wiping, the sponge may be wetted with tap water or a detergent (e.g., commercially available neutral detergents, alkaline detergents, and acidic detergents) may be applied to the sponge.

### Examples

The present invention will be described below by way of Examples. However, the present invention should not be construed as being limited to these Examples.

### <Appearance>

Appearance was visually observed and was evaluated in the following evaluation criteria.

### [Evaluation criteria]

B: The surface was colorless, transparent, and clear.
D: Loss of brightness, yellowing, or unevenness was observed.

### <Average thickness>

A thickness of the anti-fogging and anti-fouling layer was measured by observing a cross section of the anti-fogging and anti-fouling laminate with a field emission scanning electron microscope S-4700 (product name: manufactured by Hitachi High-Technologies Corporation). The measurement was performed at any 10 portions and an average value of the measurements was regarded as an average thickness.

### <Pure water contact angle>

The pure water contact angle was measured with a contact angle meter, PCA-1 (manufactured by Kyowa Interface Science Co., Ltd.) under the following conditions. Distillation water was charged into a plastic syringe. To the tip of the syringe, a stainless steel needle was attached. The distillation water was added dropwise to a surface to be evaluated (surface of the anti-fogging and anti-fouling layer).

The amount of water added dropwise: 2 µL

The measurement temperature: 25°C

A contact angle 5 seconds after water was added dropwise was measured at any 10 portions on the surface of the anti-fogging and anti-fouling layer and an average value of the measurements was regarded as the pure water contact angle.

### <Hexadecane contact angle>

The hexadecane contact angle was measured with a contact angle meter, PCA-1 (manufactured by Kyowa Interface Science Co., Ltd.) under the following conditions. Hexadecane was charged into a plastic syringe. To the tip of the syringe, a TEFLON coated stainless steel needle was attached. The hexadecane was added dropwise to a surface to be evaluated (surface of the anti-fogging and anti-fouling layer).
The amount of hexadecane added dropwise: 1 µL
The measurement temperature: 25°C

A contact angle 20 seconds after hexadecane was added dropwise was measured at any 10 portions on the surface of the anti-fogging and anti-fouling layer and an average value of the measurements was regarded as the hexadecane contact angle.

### <Coefficient of kinetic friction>

Triboster TS501 (product name; manufactured by Kyowa Interface Science Co., Ltd) was used for measurement. BEMCOT (Registered Trademark) M-3II (product name; manufactured by Asahi Kasei Corp.) was attached to a surface contact probe with pieces of double sided tape and the measurement was performed at any 12 portions under the following conditions: a measurement load of 50 g/cm², a measurement speed of 1.7 mm/s, and a measurement distance of 20 mm. An average value of the measurements was regarded as the coefficient of kinetic friction.

### <Martens hardness>

The Martens hardness of the anti-fogging and anti-fouling layer was measured with PICODENTOR HM500 (product name; manufactured by Fischer Instruments). The measurement was performed with a diamond cone as a needle under the following conditions: load of 1 mN/20 s; and a face angle of 136°.

### <Anti-fogging property>

After left to stand for 2 hours under an environment of normal temperature, the anti-fogging and anti-fouling laminate was exposed to a high temperature and high humidity environment of 35°C and 85% RH for 15 minutes. Then, a surface of the anti-fogging and anti-fouling laminate was visually observed during exposure to the high temperature and high humidity environment and was evaluated for the anti-fogging property based on evaluation criteria below.

### [Evaluation criteria]

A: Until 15 minutes after, an area of the anti-fogging and anti-fouling laminate that exhibits fogging is 30% or less.
B: Until 10 minutes after, an area of the anti-fogging and anti-fouling laminate that exhibits fogging is 30% or less.
C: Until 5 minutes after, an area of the anti-fogging and anti-fouling laminate that exhibits fogging is 30% or less.
D: In 5 minutes, an area of the anti-fogging and anti-fouling laminate that exhibits fogging is more than 30%.

### <Anti-fogging property after warming>

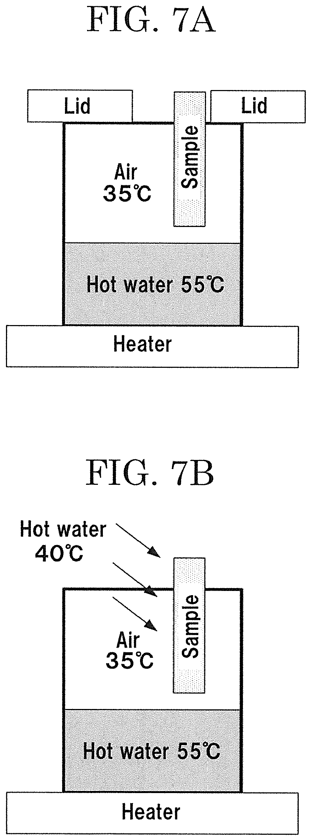

A container was filled half-full with water. The filled water was heated with a heater, a temperature thereof was maintained at 55°C, and an air temperature of the upper space in the container was maintained at 35°C. Then, an anti-fogging and anti-fouling laminate (sample) was installed in the container so as not to be in contact with water (hot water) (FIG. 7A). Then, hot water of about 40°C was applied to the anti-fogging and anti-fouling layer of the anti-fogging and anti-fouling laminate (sample) (FIG. 7B). Then, it was returned to the condition of FIG. 7A. After 30 minutes, a state of cloudiness was visually observed. Evaluation was performed based on evaluation criteria below.

### [Evaluation criteria]

A: There was no change in appearance on the surface of the anti-fogging and anti-fouling layer at all.
B: On some parts of the surface of the anti-fogging and anti-fouling layer, a change in appearance such as white cloudiness or formation of a water film was observed.
D: On the whole part of the surface of the anti-fogging and anti-fouling layer, a change in appearance such as white cloudiness or formation of a water film was observed.

### <Fouling property>

The surface of the anti-fogging and anti-fouling layer was made dirty with Sharpie PROFESSIONAL (black permanent marker, product name, manufactured by Newell Rubbermaid). After the surface was wiped with a sheet of tissue paper (ELLEAIR, manufactured by Daio Paper Corporation) 10 times so that a circle was drawn, the surface was visually observed. Then, the evaluation was performed based on the following evaluation criteria.

### [Evaluation criteria]

B: The surface favorably repelled the permanent marker, and stain disappeared by wiping it 2 to 5 times.
C: The surface weakly repelled the permanent marker, and stain disappeared by wiping it 6 to 10 times.
D: The surface did not repel the permanent marker, and stain remained even after the surface was wiped 10 times.

### <Scratch resistance>

A melamine sponge (product name: GEKIOCHI KUN) wetted with tap water was placed on the surface of the anti-fogging and anti-fouling layer, and was reciprocated and slid 10,000 times at a load of 300 gf/cm² (reciprocating stroke: 3 cm; and reciprocating and sliding speed: 6 cm/s). Then, the scratch resistance was evaluated based on evaluation criteria below.

### [Evaluation criteria]

B: There was no change in appearance such as a scratch or white cloudiness.
D: There was a change in appearance such as a scratch or white cloudiness.

### <Chemical resistance>

A compress with acetone was applied thereon for 10 minutes and chemical resistance was evaluated based on evaluation criteria below.

### [Evaluation criteria]

B: There was no change in appearance.
D: There was a change in appearance such as melting or white cloudiness.

### <Coat close adhesiveness>

The anti-fogging and anti-fouling laminate was subjected to each environment described below and each anti-fogging and anti-fouling laminate was subjected to a cross-cut close adhesive test according to JIS K5600-5-6 (cross-cut test). Then, coat close adhesiveness was evaluated based on evaluation criteria below.

### [Exposure conditions]

1: The anti-fogging and anti-fouling laminate was exposed to vapor generated from hot water of 80°C for 5 minutes.
2: The anti-fogging and anti-fouling laminate was immersed in 0.5% aqueous sodium hydroxide solution for 1 hour.

### [Evaluation criteria]

B: Peeling was not found under both conditions.
D: Peeling was found under one or more conditions.

### <Pencil hardness>

Pencil hardness was measured according to JIS K 5600-5-4.

### (Example 1)

### <Formation of primer layer>

On a substrate made of glass (float plate glass, average thickness 5 mm, manufactured by Nippon Sheet Glass Co., Ltd.), the following resin composition for forming a primer layer was coated so that an average thickness thereof after drying and curing was 1 µm. After the coating, the resultant was dried in an oven of 80°C for 2 minutes. Ultraviolet rays were emitted with a high pressure mercury lamp at a radiation dose of 500 mJ/cm² in the air atmosphere to obtain a primer layer.

### -Resin composition for forming primer layer-

| | |
|---|---|
| • UT5181 (manufactured by The Nippon Synthetic Chemical Industry Co., Ltd., urethane acrylate) | 65.0 parts by mass |
| • EBECRYL 40 (manufactured by DAICEL-ALLNEX LTD.) | 35.0 parts by mass |
| • IRGACURE 184 (manufactured by BASF) | 3.0 parts by mass |
| • Solvent PGME (propylene glycol monomethylether) | 900 parts by mass |

### <Formation of anti-fogging and anti-fouling layer>

On the primer layer, the active energy ray curable resin composition described in Table 2-1 was coated so that an average thickness thereof after drying and curing was 26 µm. After the coating, the resultant was dried in an oven of 80°C for 2 minutes. Ultraviolet rays were emitted with a metal halide lamp at a radiation dose of 500 mJ/cm² under nitrogen atmosphere (oxygen concentration of less than 0.1% by volume) to cure an anti-fogging and anti-fouling layer. As a result, an anti-fogging and anti-fouling laminate was obtained.

The anti-fogging and anti-fouling laminate obtained was evaluated as described above. Results were presented in Table 2-1.

### (Examples 2 and 3)

A laminate was obtained in the same manner as in Example 1 except that the average thickness of the primer layer in Example 1 was changed to each average thickness described in Table 2-1.

The laminate obtained was evaluated in the same manner as in Example 1. Results were presented in Table 2-1.

### (Comparative Example 1)

A laminate was obtained in the same manner as in Example 1 except that the average thickness of the primer layer and the average thickness of the anti-fogging and anti-fouling layer in Example 1 were changed to each average thickness described in Table 2-1.

The laminate obtained was evaluated in the same manner as in Example 1. Results were presented in Table 2-1.

### (Comparative Example 2, Examples 4 and 5, and Comparative Examples 3 and 4)

A laminate was obtained in the same manner as in Example 2 except that the content of the hydrophilic monomer and the content of the crosslinking agent in the active energy ray curable resin composition for forming an anti-fogging and anti-fouling layer were changed to each content described in Tables 2-2-1 and 2-2-2.

The laminate obtained was evaluated in the same manner as in Example 1. Results were presented described in Tables 2-2-1 and 2-2-2.

### (Comparative Example 5)

A laminate was obtained in the same manner as in Example 2 except that the compound of the crosslinking agent in the active energy ray curable resin composition for forming an anti-fogging and anti-fouling layer was changed to a crosslinking agent described in Table 2-2-2.

The laminate obtained was evaluated in the same manner as in Example 1. Results were presented in Table 2-2-2.

### (Examples 6 to 8 and Comparative Example 6)

A laminate was obtained in the same manner as in Example 2 except that the average thickness of the anti-fogging and anti-fouling layer was changed to each average thickness thereof described in Table 2-3.

The laminate obtained was evaluated in the same manner as in Example 1. Results were presented in Table 2-3.

### (Examples 9 to 16)

A laminate was obtained in the same manner as in Example 2 except that the photopolymerization initiator in the active energy ray curable resin composition for forming an anti-fogging and anti-fouling layer was changed to each photopolymerization initiator described in Tables 2-4-1 and 2-4-2 and the average thickness of the anti-fogging and anti-fouling layer was changed to 30 µm.

The laminate obtained was evaluated in the same manner as in Example 1. Results were presented in Tables 2-4-1 and 2-4-2.

### (Comparative Example 7)

A laminate was obtained in the same manner as in Example 9 except that the atmosphere upon curing the anti-fogging and anti-fouling layer in Example 9 was changed to the air atmosphere.

The laminate obtained was evaluated in the same manner as in Example 1. Results were presented in Table 2-5.

### (Comparative Example 8)

A laminate was obtained in the same manner as in Example 2 except that the content of the hydrophobic monomer in the active energy ray curable resin composition for forming an anti-fogging and anti-fouling layer was changed to 0 parts by mass and the average thickness of the anti-fogging and anti-fouling layer was changed to 35 µm.

The laminate obtained was evaluated in the same manner as in Example 1. Results were presented in Table 2-6-1.

### (Example 17)

A laminate was obtained in the same manner as in Example 2 except that the content of the hydrophobic monomer in the active energy ray curable resin composition for forming an anti-fogging and anti-fouling layer was changed to a content described in Table 2-6-1 and the average thickness of the anti-fogging and anti-fouling layer was changed to an average thickness described in Table 2-6-1.

The laminate obtained was evaluated in the same manner as in Example 1. Results were presented in Table 2-6-1.

### (Examples 18 to 21)

A laminate was obtained in the same manner as in Example 2 except that the content of the hydrophobic monomer in the active energy ray curable resin composition for forming an anti-fogging and anti-fouling layer was changed to each content described in Tables 2-6-1 and 2-6-2.

The laminate obtained was evaluated in the same manner as in Example 1. Results were presented in Tables 2-6-1 and 2-6-2.

### (Examples 22 to 25, and Comparative Example 9)

A laminate was obtained in the same manner as in Example 2 except that the contents of the hydrophilic monomer, the crosslinking agent, and the hydrophobic monomer in the active energy ray curable resin composition for forming an anti-fogging and anti-fouling layer were changed to contents described in Table 2-7.

The laminate obtained was evaluated in the same manner as in Example 1. Results were presented in Table 2-7.

### (Examples 26 to 28, and Comparative Example 10)

A laminate was obtained in the same manner as in Example 2 except that the compound and the content of the hydrophilic monomer and the content of the crosslinking agent in the active energy ray curable resin composition for forming an anti-fogging and anti-fouling layer were changed as described in Tables 2-8-1 and 2-8-2.

The laminate obtained was evaluated in the same manner as in Example 1. Results were presented in Tables 2-8-1 and 2-8-2.

### (Example 29)

A laminate was obtained in the same manner as in Example 2 except that the crosslinking agent in the active energy ray curable resin composition for forming an anti-fogging and anti-fouling layer was changed to a crosslinking agent described in Table 2-8-2.

The laminate obtained was evaluated in the same manner as in Example 1. Results were presented in Table 2-8-2.

### (Example 30)

A laminate was obtained in the same manner as in Example 2 except that the substrate was changed to a PET substrate (A4300, average thickness 75 µm, manufactured by TOYOBO CO., LTD.).

The laminate obtained was evaluated in the same manner as in Example 1. Results were presented in Table 2-8-2.

**Table 2-1**

| | | | Ex. 1 | Ex. 2 | Ex. 3 | Comp. Ex. 1 |
|---|---|---|---|---|---|---|
| Substrate | | | Glass | Glass | Glass | Glass |
| | Hydrophilic monomer | SR9035 | 67.9 | 67.9 | 67.9 | 67.9 |
| | | ATM-35E | | | | |
| | | A-GLY-20E | | | | |
| | | A-600 | | | | |
| | | A-1000 | | | | |
| | Crosslinking agent | EBECRYL40 | 29.1 | 29.1 | 29.1 | 29.1 |
| | | PU610 | | | | |
| | | A-DCP | | | | |
| | Hydrophobic monomer | OPTOOL DAC-HP | 0.100 | 0.100 | 0.100 | 0.100 |
| | Photopolymerization initiator | IRGACURE 184 | 2.9 | 2.9 | 2.9 | 2.9 |
| Active energy ray curable resin composition | | IRGACURE 127 | | | | |
| | | IRGACURE 651 | | | | |
| | | IRGACURE 1173 | | | | |
| | | IRGACURE 2959 | | | | |
| | | IRGACURE MBF | | | | |
| | | IRGACURE 754 | | | | |
| | | IRGACURE TPO | | | | |
| | Total of contents of non-volatile matter (parts by mass) | | 100.0 | 100.0 | 100.0 | 100.0 |
| | Solvent | PGME | 100.0 | 100.0 | 100.0 | 100.0 |
| UV curing atmosphere of anti-fogging and anti-fouling layer | | | Nitrogen | Nitrogen | Nitrogen | Nitrogen |
| Average film thickness | | Primer layer | 1 µm | 2 µm | 5 µm | 0.5 µm |
| | | Anti-fogging and anti-fouling layer | 26 µm | 26 µm | 26 µm | 30 µm |
| Appearance | | | B | B | B | B |
| Contact angle | | Pure water | 110° | 110° | 110° | 110° |
| | | Hexadecane | 67° | 67° | 67° | 67° |
| Coefficient of kinetic friction | | | 0.37 | 0.37 | 0.37 | 0.37 |
| Martens hardness (N/mm2) | | | 24 | 24 | 24 | 24 |
| Anti-fogging property | | | A | A | A | A |
| Anti-fogging property after warming | | | A | A | A | A |
| Fouling property | | | A | A | A | A |
| Scratch resistance | | | B | B | B | B |
| Chemical resistance | | | B | B | B | B |
| Coat close adhesiveness | | | B | B | B | D |
| Pencil hardness | | | 3H | 3H | 3H | 3H |

**Table 2-2-1**

| | | | Comp. Ex. 2 | Ex. 4 | Ex. 5 |
|---|---|---|---|---|---|
| Substrate | | | Glass | Glass | Glass |
| | Hydrophilic monomer | SR9035 | 94.1 | 77.6 | 58.2 |
| | | ATM-35E | | | |
| | | A-GLY-20E | | | |
| | | A-600 | | | |
| | | A-1000 | | | |
| | Crosslinking agent | EBECRYL40 | 2.9 | 19.4 | 38.8 |
| | | PU610 | | | |
| | | A-DCP | | | |
| | Hydrophobic monomer | OPTOOL DAC-HP | 0.100 | 0.100 | 0.100 |
| | Photopolymerization initiator | IRGACURE 184 | 2.9 | 2.9 | 2.9 |
| Active energy ray curable resin composition | | IRGACURE 127 | | | |
| | | IRGACURE 651 | | | |
| | | IRGACURE 1173 | | | |
| | | IRGACURE 2959 | | | |
| | | IRGACURE MBF | | | |
| | | IRGACURE 754 | | | |
| | | IRGACURE TPO | | | |
| | Total of contents of non-volatile matter (parts by mass) | | 100.0 | 100.0 | 100.0 |
| | Solvent | PGME | 100.0 | 100.0 | 100.0 |
| UV curing atmosphere o f anti-fogging and anti-fouling layer | | | Nitrogen | Nitrogen | Nitrogen |
| Average film thickness | | Primer layer | 2 µm | 2 µm | 2 µm |
| | | Anti-fogging and anti-fouling layer | 26 µm | 26 µm | 26 µm |
| Appearance | | | B | B | B |
| Contact angle | | Pure water | 110° | 110° | 110° |
| | | Hexadecane | 67° | 67° | 67° |
| Coefficient of kinetic friction | | | 0.37 | 0.37 | 0.37 |
| Martens hardness (N/mm2) | | | 16 | 21 | 26 |
| Anti-fogging property | | | A | A | B |
| Anti-fogging property after warming | | | A | A | A |
| Fouling property | | | A | A | A |
| Scratch resistance | | | D | B | B |
| Chemical resistance | | | D | B | B |
| Coat close adhesiveness | | | B | B | B |
| Pencil hardness | | | 2H | 3H | 3H |

**Table 2-2-2**

| | | | Comp. Ex. 3 | Comp. Ex. 4 | Comp. Ex. 5 |
|---|---|---|---|---|---|
| Substrate | | | Glass | Glass | Glass |
| | Hydrophilic monomer | SR9035 | 48.5 | 0.0 | 67.9 |
| | | ATM-35E | | | |
| | | A-GLY-20E | | | |
| | | A-600 | | | |
| | | A-1000 | | | |
| | Crosslinking agent | EBECRYL40 | 48.5 | 97.0 | |
| | | PU610 | | | |
| | | A-DCP | | | 29.1 |
| | Hydrophobic monomer | OPTOOL DAC-HP | 0.100 | 0.100 | 0.100 |
| | Photopolymerization initiator | IRGACURE 184 | 2.9 | 2.9 | 2.9 |
| Active energy ray curable resin composition | | IRGACURE 127 | | | |
| | | IRGACURE 651 | | | |
| | | IRGACURE 1173 | | | |
| | | IRGACURE 2959 | | | |
| | | IRGACURE MBF | | | |
| | | IRGACURE 754 | | | |
| | | IRGACURE TPO | | | |
| | Total of contents of non-volatile matter (parts by mass) | | 100.0 | 100.0 | 100.0 |
| | Solvent | PGME | 100.0 | 100.0 | 100.0 |
| UV curing atmosphere of anti-fogging and anti-fouling layer | | | Nitrogen | Nitrogen | Nitrogen |
| Average film thickness | | Primer layer | 2 µm | 2 µm | 2 µm |
| | | Anti-fogging and anti-fouling layer | 26 µm | 26 µm | 26 µm |
| Appearance | | | B | B | B |
| Contact angle | | Pure water | 110° | 110° | 110° |
| | | Hexadecane | 67° | 67° | 67° |
| Coefficient of kinetic friction | | | 0.37 | 0.37 | 0.37 |
| Martens hardness (N/mm2) | | | 29 | 43 | 44 |
| Anti-fogging property | | | D | D | D |
| Anti-fogging property after warming | | | - | D | D |
| Fouling property | | | B | B | B |
| Scratch resistance | | | B | B | B |
| Chemical resistance | | | B | B | B |
| Coat close adhesiveness | | | B | B | B |
| Pencil hardness | | | 3H | 3H | H |

**Table 2-3**

| | | | Ex. 6 | Ex. 7 | Ex. 8 | Comp. Ex. 6 |
|---|---|---|---|---|---|---|
| Substrate | | | Glass | Glass | Glass | Glass |
| | Hydrophilic monomer | SR9035 | 67.9 | 67.9 | 67.9 | 67.9 |
| | | ATM-35E | | | | |
| | | A-GLY-20E | | | | |
| | | A-600 | | | | |
| | | A-1000 | | | | |
| | Crosslinking agent | EBECRYL40 | 29.1 | 29.1 | 29.1 | 29.1 |
| | | PU610 | | | | |
| | | A-DCP | | | | |
| | Hydrophobic monomer | OPTOOL DAC-HP | 0.100 | 0.100 | 0.100 | 0.100 |
| | Photopolymerization initiator | IRGACURE 184 | 2.9 | 2.9 | 2.9 | 2.9 |
| Active energy ray curable resin composition | | IRGACURE 127 | | | | |
| | | IRGACURE 651 | | | | |
| | | IRGACURE 1173 | | | | |
| | | IRGACURE 2959 | | | | |
| | | IRGACURE MBF | | | | |
| | | IRGACURE 754 | | | | |
| | | IRGACURE TPO | | | | |
| | Total of contents of non-volatile matter (parts by mass) | | 100.0 | 100.0 | 100.0 | 100.0 |
| | Solvent | PGME | 100.0 | 100.0 | 100.0 | 100.0 |
| UV curing atmosphere of anti-fogging and anti-fouling layer | | | Nitrogen | Nitrogen | Nitrogen | Nitrogen |
| Average film thickness | | Primer layer | 2 µm | 2 µm | 2 µm | 2 µm |
| | | Anti-fogging and anti-fouling layer | 50 µm | 20 µm | 10 µm | 5 µm |
| Appearance | | | B | B | B | B |
| Contact angle | | Pure water | 110° | 110° | 110° | 110° |
| | | Hexadecane | 67° | 67° | 67° | 67° |
| Coefficient of kinetic friction | | | 0.38 | 0.36 | 0.36 | 0.35 |
| Martens hardness (N/mm2) | | | 24 | 24 | 24 | 24 |
| Anti-fogging property | | | A | B | C | D |
| Anti-fogging property after warming | | | A | A | A | - |
| Fouling property | | | A | A | A | A |
| Scratch resistance | | | B | B | B | B |
| Chemical resistance | | | B | B | B | B |
| Coat close adhesiveness | | | B | B | B | B |
| Pencil hardness | | | 3H | 3H | 3H | 3H |

**Table 2-4-1**

| | | | Ex. 9 | Ex. 10 | Ex. 11 | Ex. 12 |
|---|---|---|---|---|---|---|
| Substrate | | | Glass | Glass | Glass | Glass |
| | Hydrophilic monomer | SR9035 | 67.9 | 67.9 | 67.9 | 67.9 |
| | | ATM-35E | | | | |
| | | A-GLY-20E | | | | |
| | | A-600 | | | | |
| | | A-1000 | | | | |
| | Crosslinking agent | EBECRYL40 | 29.1 | 29.1 | 29.1 | 29.1 |
| | | PU610 | | | | |
| | | A-DCP | | | | |
| | Hydrophobic monomer | OPTOOL DAC-HP | 0.100 | 0.100 | 0.100 | 0.100 |
| | Photopolymerization initiator | IRGACURE 184 | 2.9 | | | |
| Active energy ray curable resin composition | | IRGACURE 127 | | 2.9 | | |
| | | IRGACURE 651 | | | 2.9 | |
| | | IRGACURE 1173 | | | | 2.9 |
| | | IRGACURE 2959 | | | | |
| | | IRGACURE MBF | | | | |
| | | IRGACURE 754 | | | | |
| | | IRGACURE TPO | | | | |
| | Total of contents of non-volatile matter (parts by mass) | | 100.0 | 100.0 | 100.0 | 100.0 |
| | Solvent | PGME | 100.0 | 100.0 | 100.0 | 100.0 |
| UV curing atmosphere of anti-fogging and anti-fouling layer | | | Nitrogen | Nitrogen | Nitrogen | Nitrogen |
| Average film thickness | | Primer layer | 2 µm | 2 µm | 2 µm | 2 µm |
| | | Anti-fogging and anti-fouling layer | 30 µm | 30 µm | 30 µm | 30 µm |
| Appearance | | | B | B | B | B |
| Contact angle | | Pure water | 110° | 110° | 110° | 110° |
| | | Hexadecane | 67° | 67° | 67° | 67° |
| Coefficient of kinetic friction | | | 0.37 | 0.37 | 0.37 | 0.37 |
| Martens hardness (N/mm2) | | | 24 | 24 | 24 | 24 |
| Anti-fogging property | | | A | A | A | A |
| Anti-fogging property after warming | | | A | A | A | A |
| Fouling property | | | A | A | A | A |
| Scratch resistance | | | B | B | B | B |
| Chemical resistance | | | B | B | B | B |
| Coat close adhesiveness | | | B | B | B | B |
| Pencil hardness | | | 3H | 3H | 3H | 3H |

**Table 2-4-2**

| | | | Ex. 13 | Ex. 14 | Ex. 15 | Ex.16 |
|---|---|---|---|---|---|---|
| Substrate | | | Glass | Glass | Glass | Glass |
| | Hydrophilic monomer | SR9035 | 67.9 | 67.9 | 67.9 | 67.9 |
| | | ATM-35E | | | | |
| | | A-GLY-20E | | | | |
| | | A-600 | | | | |
| | | A-1000 | | | | |
| | Crosslinking agent | EBECRYL40 | 29.1 | 29.1 | 29.1 | 29.1 |
| | | PU610 | | | | |
| | | A-DCP | | | | |
| | Hydrophobic monomer | OPTOOL DAC-HP | 0.100 | 0.100 | 0.100 | 0.100 |
| | Photopolymerization initiator | IRGACURE 184 | | | | |
| Active energy ray curable resin composition | | IRGACURE 127 | | | | |
| | | IRGACURE 651 | | | | |
| | | IRGACURE 1173 | | | | |
| | | IRGACURE 2959 | 2.9 | | | |
| | | IRGACURE MBF | | 2.9 | | |
| | | IRGACURE 754 | | | 2.9 | |
| | | IRGACURE TPO | | | | 2.9 |
| | Total of contents of non-volatile matter (parts by mass) | | 100.0 | 100.0 | 100.0 | 100.0 |
| | Solvent | PGME | 100.0 | 100.0 | 100.0 | 100.0 |
| UV curing atmosphere of anti-fogging and anti-fouling layer | | | Nitrogen | Nitrogen | Nitrogen | Nitrogen |
| Average film thickness | | Primer layer | 2 µm | 2 µm | 2 µm | 2 µm |
| | | Anti-fogging and anti-fouling layer | 30 µm | 30 µm | 30 µm | 30 µm |
| Appearance | | | B | B | B | B |
| Contact angle | | Pure water | 110° | 110° | 110° | 110° |
| | | Hexadecane | 67° | 67° | 67° | 67° |
| Coefficient of kinetic friction | | | 0.37 | 0.37 | 0.37 | 0.37 |
| Martens hardness (N/mm2) | | | 24 | 24 | 24 | 24 |
| Anti-fogging property | | | A | A | A | A |
| Anti-fogging property after warming | | | A | A | A | A |
| Fouling property | | | A | B | B | B |
| Scratch resistance | | | B | B | B | B |
| Chemical resistance | | | B | B | B | B |
| Coat close adhesiveness | | | B | B | B | B |
| Pencil hardness | | | 3H | 3H | 3H | 3H |

**Table 2-5**

| | | | Comp. Ex. 7 |
|---|---|---|---|
| Substrate | | | Glass |
| | Hydrophilic monomer | SR9035 | 67.9 |
| | | ATM-35E | |
| | | A-GLY-20E | |
| | | A-600 | |
| | | A-1000 | |
| | Crosslinking agent | EBECRYL40 | 29.1 |
| | | PU610 | |
| | | A-DCP | |
| Active energy ray curable resin composition | Hydrophobic monomer | OPTOOL DAC-HP | 0.100 |
| | Photopolymerization initiator | IRGACURE 184 | 2.9 |
| | | IRGACURE 127 | |
| | | IRGACURE 651 | |
| | | IRGACURE 1173 | |
| | | IRGACURE 2959 | |
| | | IRGACURE MBF | |
| | | IRGACURE 754 | |
| | | IRGACURE TPO | |
| | Total of contents of non-volatile matter (parts by mass) | | 100.0 |
| | Solvent | PGME | 100.0 |
| UV curing atmosphere of anti-fogging and anti-fouling layer | | | Air |
| Average film thickness | | Primer layer | 2 µm |
| | | Anti-fogging and anti-fouling layer | 30 µm |
| Appearance | | | B |
| Contact angle | | Pure water | 78° |
| | | Hexadecane | - |
| Coefficient of kinetic friction | | | 0.50 |
| Martens hardness (N/mm2) | | | 24 |
| Anti-fogging property | | | A |
| Anti-fogging property after warming | | | A |
| Fouling property | | | D |
| Scratch resistance | | | D |
| Chemical resistance | | | - |
| Coat close adhesiveness | | | B |
| Pencil hardness | | | - |

**Table 2-6-1**

| | | | Comp. Ex. 8 | Ex. 1 7 | Ex. 18 |
|---|---|---|---|---|---|
| Substrate | | | Glass | Glass | Glass |
| | Hydrophilic monomer | SR9035 | 67.9 | 67.9 | 67.9 |
| | | ATM-35E | | | |
| | | A-GLY-20E | | | |
| | | A-600 | | | |
| | | A-1000 | | | |
| | Crosslinking agent | EBECRYL40 | 29.1 | 29.1 | 29.1 |
| | | PU610 | | | |
| | | A-DCP | | | |
| | Hydrophobic monomer | OPTOOL DAC-HP | | 0.005 | 0.010 |
| | Photopolymerization initiator | IRGACURE 184 | 2.9 | 2.9 | 2.9 |
| Active energy ray curable resin composition | | IRGACURE 127 | | | |
| | | IRGACURE 651 | | | |
| | | IRGACURE 1173 | | | |
| | | IRGACURE 2959 | | | |
| | | IRGACURE MBF | | | |
| | | IRGACURE 754 | | | |
| | | IRGACURE TPO | | | |
| | Total of contents of non-volatile matter (parts by mass) | | 99.9 | 99.9 | 99.9 |
| | Solvent | PGME | 100.0 | 100.0 | 100.0 |
| UV curing atmosphere of anti-fogging and anti-fouling layer | | | Nitrogen | Nitrogen | Nitrogen |
| Average film thickness | | Primer layer | 2 µm | 2 µm | 2 µm |
| | | Anti-fogging and anti-fouling layer | 35 µm | 35 µm | 26 µm |
| Appearance | | | B | B | B |
| Contact angle | | Pure water | - | 110° | 110° |
| | | Hexadecane | - | 67° | 67° |
| Coefficient of kinetic friction | | | - | 0.39 | 0.37 |
| Martens hardness (N/mm2) | | | 24 | 24 | 24 |
| Anti-fogging property | | | A | A | A |
| Anti-fogging property after warming | | | A | A | A |
| Fouling property | | | D | B | B |
| Scratch resistance | | | D | B | B |
| Chemical resistance | | | - | B | B |
| Coat close adhesiveness | | | B | B | B |
| Pencil hardness | | | - | 3H | 3H |

**Table 2-6-2**

| | | | Ex. 19 | Ex. 20 | Ex. 21 |
|---|---|---|---|---|---|
| Substrate | | | Glass | Glass | Glass |
| | Hydrophilic monomer | SR9035 | 67.9 | 67.9 | 67.9 |
| | | ATM-35E | | | |
| | | A-GLY-20E | | | |
| | | A-600 | | | |
| | | A-1000 | | | |
| | Crosslinking agent | EBECRYL40 | 29.1 | 29.1 | 29.1 |
| | | PU610 | | | |
| | | A-DCP | | | |
| | Hydrophobic monomer | OPTOOL DAC-HP | 0.050 | 0.100 | 0.500 |
| | Photopolymerization initiator | IRGACURE 184 | 2.9 | 2.9 | 2.9 |
| Active energy ray curable resin composition | | IRGACURE 127 | | | |
| | | IRGACURE 651 | | | |
| | | IRGACURE 1173 | | | |
| | | IRGACURE 2959 | | | |
| | | IRGACURE MBF | | | |
| | | IRGACURE 754 | | | |
| | | IRGACURE TPO | | | |
| | Total of contents of non-volatile matter (parts by mass) | | 100.0 | 100.0 | 100.4 |
| | Solvent | PGME | 100.0 | 100.0 | 100.0 |
| UV curing atmosphere of anti-fogging and anti-fouling layer | | | Nitrogen | Nitrogen | Nitrogen |
| Average film thickness | | Primer layer | 2 µm | 2 µm | 2 µm |
| | | Anti-fogging and anti-fouling layer | 26 µm | 26 µm | 26 µm |
| Appearance | | | B | B | B |
| Contact angle | | Pure water | 110° | 110° | 110° |
| | | Hexadecane | 67° | 67° | 67° |
| Coefficient of kinetic friction | | | 0.37 | 0.37 | 0.37 |
| Martens hardness (N/mm2) | | | 24 | 24 | 24 |
| Anti-fogging property | | | A | A | A |
| Anti-fogging property after warming | | | A | A | A |
| Fouling property | | | B | B | B |
| Scratch resistance | | | B | B | B |
| Chemical resistance | | | B | B | B |
| Coat close adhesiveness | | | B | B | B |
| Pencil hardness | | | 3H | 3H | 3H |

**Table 2-7**

| | | | Ex. 22 | Ex. 23 | Ex. 24 | Ex. 25 | Comp. Ex. 9 |
|---|---|---|---|---|---|---|---|
| Substrate | | | Glass | Glass | Glass | Glass | Glass |
| | Hydrophilic monomer | SR9035 | 67.3 | 67.3 | 67.3 | 67.3 | 60.3 |
| | | ATM-35E | | | | | |
| | | A-GLY-20E | | | | | |
| | | A-600 | | | | | |
| | | A-1000 | | | | | |
| | Crosslinking agent | EBECRYL40 | 28.8 | 28.8 | 28.8 | 28.8 | 25.8 |
| | | PU610 | | | | | |
| | | A-DCP | | | | | |
| | Hydrophobic monomer | OPTOOL DAC-HP | 1.000 | 2.050 | 3.100 | 4.700 | 11.000 |
| | Photopolymerization initiator | IRGACURE 184 | 2.9 | 2.9 | 2.9 | 2.9 | 2.9 |
| Active energy ray curable resin composition | | IRGACURE 127 | | | | | |
| | | IRGACURE 651 | | | | | |
| | | IRGACURE 1173 | | | | | |
| | | IRGACURE 2959 | | | | | |
| | | IRGACURE MBF | | | | | |
| | | IRGACURE 754 | | | | | |
| | | IRGACURE TPO | | | | | |
| | Total of contents of non-volatile matter (parts by mass) | | 100.0 | 101.1 | 102.1 | 103.7 | 100.0 |
| | Solvent | PGME | 100.0 | 100.0 | 100.0 | 100.0 | 100.0 |
| UV curing atmosphere of anti-fogging and anti-fouling layer | | | Nitrogen | Nitrogen | Nitrogen | Nitrogen | Nitrogen |
| Average film thickness | | Primer layer | 2 µm | 2 µm | 2 µm | 2 µm | 2 µm |
| | | Anti-fogging and anti-fouling layer | 26 µm | 26 µm | 26 µm | 26 µm | 26 µm |
| Appearance | | | B | B | B | B | D |
| Contact angle | | Pure water | 110° | 110° | 110° | 110° | 110° |
| | | Hexadecane | 67° | 67° | 67° | 67° | 67° |
| Coefficient of kinetic friction | | | 0.36 | 0.35 | 0.36 | 0.36 | 0.37 |
| Martens hardness (N/mm2) | | | 24 | 24 | 24 | 24 | 24 |
| Anti-fogging property | | | A | A | A | A | - |
| Anti-fogging property after warming | | | A | A | A | A | - |
| Fouling property | | | B | B | B | B | B |
| Scratch resistance | | | B | B | B | B | B |
| Chemical resistance | | | B | B | B | B | B |
| Coat close adhesiveness | | | B | B | B | B | - |
| Pencil hardness | | | 3H | 3H | 3H | 3H | 3H |

**Table 2-8-1**

| | | | Ex. 26 | Ex. 27 | Ex. 28 |
|---|---|---|---|---|---|
| Substrate | | | Glass | Glass | Glass |
| | Hydrophilic monomer | SR9035 | | | |
| | | ATM-35E | 67.9 | | |
| | | A-GLY-20E | | 67.9 | |
| | | A-600 | | | 58.2 |
| | | A-1000 | | | |
| | Crosslinking agent | EBECRYL40 | 29.1 | 29.1 | 38.8 |
| | | PU610 | | | |
| | | A-DCP | | | |
| | Hydrophobic monomer | OPTOOL DAC-HP | 0.100 | 0.100 | 0.100 |
| | Photopolymerization initiator | IRGACURE 184 | 2.9 | 2.9 | 2.9 |
| Active energy ray curable resin composition | | IRGACURE 127 | | | |
| | | IRGACURE 651 | | | |
| | | IRGACURE 1173 | | | |
| | | IRGACURE 2959 | | | |
| | | IRGACURE MBF | | | |
| | | IRGACURE 754 | | | |
| | | IRGACURE TPO | | | |
| | Total of contents of non-volatile matter (parts by mass) | | 100.0 | 100.0 | 100.0 |
| | Solvent | PGME | 100.0 | 100.0 | 100.0 |
| UV curing atmosphere of anti-fogging and anti-fouling layer | | | Nitrogen | Nitrogen | Nitrogen |
| Average film thickness | | Primer layer | 2 µm | 2 µm | 2 µm |
| | | Anti-fogging and anti-fouling layer | 26 µm | 26 µm | 26 µm |
| Appearance | | | B | B | B |
| Contact angle | | Pure water | 110° | 110° | 110° |
| | | Hexadecane | 67° | 67° | 67° |
| Coefficient of kinetic friction | | | 0.37 | 0.37 | 0.37 |
| Martens hardness (N/mm2) | | | 19 | 22 | 25 |
| Anti-fogging property | | | A | A | A |
| Anti-fogging property after warming | | | A | A | A |
| Fouling property | | | B | B | B |
| Scratch resistance | | | B | B | B |
| Chemical resistance | | | B | B | B |
| Coat close adhesiveness | | | B | B | B |
| Pencil hardness | | | 3H | 3H | 2H |

**Table 2-8-2**

| | | | Comp. Ex. 10 | Ex. 29 | Ex. 30 |
|---|---|---|---|---|---|
| Substrate | | | Glass | Glass | PET |
| | Hydrophilic monomer | SR9035 | | 67.9 | 67.9 |
| | | ATM-35E | | | |
| | | A-GLY-20E | | | |
| | | A-600 | | | |
| | | A-1000 | 58.2 | | |
| | Crosslinking agent | EBECRYL40 | 38.8 | | 29.1 |
| | | PU610 | | 29.1 | |
| | | A-DCP | | | |
| | Hydrophobic monomer | OPTOOL DAC-HP | 0.100 | 0.100 | 0.100 |
| | Photopolymerization initiator | IRGACURE 184 | 2.9 | 2.9 | 2.9 |
| Active energy ray curable resin composition | | IRGACURE 127 | | | |
| | | IRGACURE 651 | | | |
| | | IRGACURE 1173 | | | |
| | | IRGACURE 2959 | | | |
| | | IRGACURE MBF | | | |
| | | IRGACURE 754 | | | |
| | | IRGACURE TPO | | | |
| | Total of contents of non-volatile matter (parts by mass) | | 100.0 | 100.0 | 100.0 |
| | Solvent | PGME | 100.0 | 100.0 | 100.0 |
| UV curing atmosphere of anti-fogging and anti-fouling layer | | | Nitrogen | Nitrogen | Nitrogen |
| Average film thickness | | Primer layer | 2 µm | 2 µm | 2 µm |
| | | Anti-fogging and anti-fouling layer | 26 µm | 26 µm | 26 µm |
| Appearance | | | B | B | B |
| Contact angle | | Pure water | 110° | 110° | 110° |
| | | Hexadecane | 67° | 67° | 67° |
| Coefficient of kinetic friction | | | 0.37 | 0.37 | 0.37 |
| Martens hardness (N/mm2) | | | 8 | 50 | 24 |
| Anti-fogging property | | | A | B | A |
| Anti-fogging property after warming | | | A | B | A |
| Fouling property | | | B | B | B |
| Scratch resistance | | | D | B | B |
| Chemical resistance | | | D | B | B |
| Coat close adhesiveness | | | B | B | B |
| Pencil hardness | | | H | 5H | B |

In Table 2-1 to Tables 2-8-2, a unit of a content of each component in the active energy ray curable resin composition is part(s) by mass.

Details of the materials described in Table 2-1 to Tables 2-8-2 are as follows.

In a part presenting "-" in Comparative Examples, the evaluation was not performed because a result of another evaluation was insufficient.

### <Hydrophilic monomer>

- SR9035: Ethoxylated (15) trimethylolpropane triacrylate, manufactured by SARTOMER
- ATM-35E: Ethoxylated pentaerythritol tetraacrylate, manufactured by Shin Nakamura Chemical Co., Ltd.
- A-GLY-20E: Ethoxylated glycerin triacrylate, manufactured by Shin Nakamura Chemical Co., Ltd.
- A-600: Polyethylene glycol diacrylate, manufactured by Shin Nakamura Chemical Co., Ltd.

### «Others»

- A-1000: Polyethylene glycol diacrylate, manufactured by Shin Nakamura Chemical Co., Ltd.

### <Crosslinking agent>

- EBECRYL40: Pentaerythritol alkoxy tetraacrylate, manufactured by DAICEL-ALLNEX LTD.
- PU610: Aliphatic urethane acrylate (the numeber of acrylic groups: 6, molecular weight: 1800), manufactured by Miwon

### «Others»

- A-DCP: Tricyclodecane dimethanol diacrylate, manufactured by Shin Nakamura Chemical Co., Ltd.

### <Hydrophobic monomer>

O PTOOL DAC-HP: Terminal (meth)acrylic-modified perfluoropolyether additive, manufactured by DAIKIN INDUSTRIES, LTD

### <Photopolymerization initiator>

- IRGACURE 184: 1-Hydroxy-cyclohexyl-phenyl-ketone, manufactured by BASF
- IRGACURE 127: 2-Hydroxy-1-{4-[4-(2-hydroxy-2-methyl-propionyl)-benzil]phenyl}-2-methyl-propan-1-one, manufactured by BASF
- IRGACURE 651: 2,2-Dimethoxy-1,2-diphenylethan-1-one, manufactured by BASF
- IRGACURE 1173: 2-Hydroxy-2-methyl-1-phenyl-propan-1-one, manufactured by BASF
- IRGACURE 2959: 1-[4-(2-Hydroxy-ethoxy)-phenyl]-2-hydroxy-2-methyl-1-propan-1-one, manufactured by BASF
- IRGACURE MBF: Phenyl glyoxylic acid methyl ester, manufactured by BASF
- IRGACURE 754: Blend of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester, manufactured by BASF
- IRGACURE TPO: 2,4,6-Trimethylbenzoyl-diphenyl-phosphine oxide, manufactured by BASF

### <Solvent>

### PGME: Propylene glycol monomethylether

The anti-fogging and anti-fouling laminates of Examples 1 to 30 have the following characteristics. Therefore, the anti-fogging and anti-fouling laminates were excellent in the fouling property and the durability, and were not deteriorated in the appearance and were excellent in the anti-fogging property even under higher temperature and higher humidity conditions.

### <Characteristics of anti-fogging and anti-fouling laminate>

The anti-fogging and anti-fouling laminate has the following characteristics.

An average thickness of the primer layer is more than 0.5 µm.

The anti-fogging and anti-fouling layer has a coefficient of kinetic friction of 0.40 or less.

The anti-fogging and anti-fouling layer has an average thickness of 10 µm or more.

The anti-fogging and anti-fouling layer has Martens hardness of 10 N/mm² or more.

The anti-fogging and anti-fouling layer is a cured product of an active energy ray curable resin composition.

The active energy ray curable resin composition includes a hydrophilic monomer having an alkylene oxide equivalent of less than 100 and an acrylic equivalent of 200 to 500, a non-alicyclic crosslinking agent having an alkylene oxide equivalent of 100 or more and an acrylic equivalent of less than 400, and a hydrophobic monomer including at least one selected from the group consisting of fluorine and silicon.

A content of the crosslinking agent in the active energy ray curable resin composition is 5% by mass to 40% by mass relative to non-volatile matter of the active energy ray curable resin composition.

A content of the hydrophobic monomer in the active energy ray curable resin composition is 0.001% by mass to 10% by mass relative to the non-volatile matter of the active energy ray curable resin composition.

Meanwhile, the laminate of Comparative Example 1 had the primer layer having a thin average thickness of 0.5 µm, and was insufficient in the coat close adhesiveness.

The laminate of Comparative Example 2 had a small amount of the crosslinking agent in the active energy ray curable resin composition for forming an anti-fogging and anti-fouling layer, and was insufficient in the scratch resistance and the chemical resistance.

The laminates of Comparative Examples 3 and 4 were insufficient in the anti-fogging property because the content of the crosslinking agent in the active energy ray curable resin composition for forming an anti-fogging and anti-fouling layer was excessive.

The laminate of Comparative Example 5 was insufficient in the anti-fogging property because the crosslinking agent in the active energy ray curable resin composition for forming an anti-fogging and anti-fouling layer had an alicyclic structure.

The laminate of Comparative Example 6 was insufficient in the anti-fogging property because the anti-fogging and anti-fouling layer had a thin thickness of 5 µm.

The laminate of Comparative Example 7 was insufficient in the fouling property and the scratch resistance, because the coefficient of kinetic friction became high as a result of UV irradiation under the air atmosphere when the anti-fogging and anti-fouling layer was laminated.

The laminate of Comparative Example 8 was insufficient in the fouling property because the active energy ray curable resin composition for forming an anti-fogging and anti-fouling layer did not include the hydrophobic monomer.

The laminate of Comparative Example 9 was insufficient in the appearance because the content of the hydrophobic monomer in the active energy ray curable resin composition for forming an anti-fogging and anti-fouling layer was excessive.

The laminate of Comparative Example 10 was insufficient in the scratch resistance and the hardness because the hydrophilic monomer of the active energy ray curable resin composition for forming an anti-fogging and anti-fouling layer had a large acrylic equivalent. In addition, it had a lower pencil hardness compared to the laminates of Example 5 and Example 28 that included a glass substrate and were only different in the hydrophilic monomer.

### Industrial Applicability

The anti-fogging and anti-fouling laminate of the present invention can be used in, for example, glass windows, refrigerating/freezing show cases, window materials such as windows of automobiles, mirrors of wet areas such as bathrooms and washrooms, mirrors of side mirrors of automobiles, floors and walls of bathrooms, surfaces of solar cell panels, and crime prevention monitoring cameras. In addition, the anti-fogging and anti-fouling laminate of the present invention is easily molded and processed. Therefore, it can be used, by using in-mold molding and insert molding, in glasses, goggles, helmets, lens, microlens arrays, head light covers, front panels, side panels, and rear panels of automobiles.

### Reference Signs List

- 11: substrate made of a resin
- 12: primer layer
- 13: anti-fogging and anti-fouling layer

## Claims

1. An anti-fogging and anti-fouling laminate comprising:
a substrate;
a primer layer on the substrate; and
an anti-fogging and anti-fouling layer on the primer layer, the anti-fogging and anti-fouling layer having a flat surface,
wherein an average thickness of the primer layer is more than 0.5 µm,
the anti-fogging and anti-fouling layer has Martens hardness of 10 N/mm² or more, a coefficient of kinetic friction of 0.40 or less, and an average thickness of 10 µm or more,
the anti-fogging and anti-fouling layer is a cured product of an active energy ray curable resin composition,
the active energy ray curable resin composition includes a hydrophilic monomer having an alkylene oxide equivalent of less than 100 and an acrylic equivalent of 200 to 500, a non-alicyclic crosslinking agent having an alkylene oxide equivalent of 100 or more and an acrylic equivalent of less than 400, and a hydrophobic monomer including at least one selected from the group consisting of fluorine and silicon,
a content of the crosslinking agent in the active energy ray curable resin composition is 5% by mass to 40% by mass relative to non-volatile matter of the active energy ray curable resin composition, and
a content of the hydrophobic monomer in the active energy ray curable resin composition is 0.001% by mass to 10% by mass relative to the non-volatile matter of the active energy ray curable resin composition.

2. The anti-fogging and anti-fouling laminate according to claim 1,
wherein a surface of the anti-fogging and anti-fouling layer has a pure water contact angle of 80° or more and a hexadecane contact angle of 35° or more.

3. The anti-fogging and anti-fouling laminate according to claim 1 or 2,
wherein when the anti-fogging and anti-fouling laminate is evaluated for an anti-fogging property through an evaluation method below, a result of the anti-fogging property is A:
<Evaluation method of anti-fogging property>
after left to stand for 2 hours under an environment of normal temperature, the anti-fogging and anti-fouling laminate is exposed to a high temperature and high humidity environment of 35°C and 85% RH for 15 minutes; and a surface of the anti-fogging and anti-fouling laminate is visually observed during exposure to the high temperature and high humidity environment and is evaluated for the anti-fogging property based on evaluation criteria below:
[Evaluation criteria]
A: until 15 minutes after, an area of the anti-fogging and anti-fouling laminate that exhibits fogging is 30% or less;
B: until 10 minutes after, an area of the anti-fogging and anti-fouling laminate that exhibits fogging is 30% or less;
C: until 5 minutes after, an area of the anti-fogging and anti-fouling laminate that exhibits fogging is 30% or less; and
D: in 5 minutes, an area of the anti-fogging and anti-fouling laminate that exhibits fogging is more than 30%.

4. The anti-fogging and anti-fouling laminate according to any one of claims 1 to 3,
wherein a content of the hydrophilic monomer in the active energy ray curable resin composition is 55% by mass to 90% by mass relative to the non-volatile matter of the active energy ray curable resin composition.

5. The anti-fogging and anti-fouling laminate according to any one of claims 1 to 4,
wherein the substrate is a substrate made of glass.

6. The anti-fogging and anti-fouling laminate according to any one of claims 1 to 5,
wherein an average thickness of the anti-fogging and anti-fouling layer is 10 µm to 100 µm.

7. The anti-fogging and anti-fouling laminate according to any one of claims 1 to 6,
wherein an average thickness of the primer layer is 1 µm to 10 µm.

8. A product comprising:
the anti-fogging and anti-fouling laminate according to any one of claims 1 to 7 on a surface of the product.

9. A method for producing an anti-fogging and anti-fouling laminate, the method comprising:
irradiating an uncured layer formed of the active energy ray curable resin composition on the primer layer with ultraviolet rays under an atmosphere having an oxygen concentration of less than 0.1% by volume to form the anti-fogging and anti-fouling layer,
wherein the anti-fogging and anti-fouling laminate is the anti-fogging and anti-fouling laminate according to any one of claims 1 to 7.

10. An anti-fogging method comprising:
warming the anti-fogging and anti-fouling laminate according to any one of claims 1 to 7 to a temperature equal to or higher than normal temperature to improve an anti-fogging property of the anti-fogging and anti-fouling layer.

11. An anti-fogging method comprising:
cleaning the anti-fogging and anti-fouling layer of the anti-fogging and anti-fouling laminate according to any one of claims 1 to 7 to maintain an anti-fogging property of the anti-fogging and anti-fouling layer.

12. An active energy ray curable resin composition comprising:
a hydrophilic monomer;
a hydrophobic monomer;
a non-alicyclic crosslinking agent; and
a photopolymerization initiator,
wherein the hydrophilic monomer has an alkylene oxide equivalent of less than 100 and an acrylic equivalent of 200 to 500,
the hydrophobic monomer includes at least one selected from the group consisting of fluorine and silicon,
the crosslinking agent has an alkylene oxide equivalent of 100 or more and an acrylic equivalent of less than 400,
a content of the hydrophobic monomer is 0.001% by mass to 10% by mass relative to non-volatile matter of the active energy ray curable resin composition, and
a content of the crosslinking agent is 5% by mass to 40% by mass relative to the non-volatile matter of the active energy ray curable resin composition.

13. The active energy ray curable resin composition according to claim 12,
wherein a surface of an anti-fogging and anti-fouling layer having a flat surface, which is obtained by curing the active energy ray curable resin composition through active energy rays, has Martens hardness of 10 N/mm² or more and a coefficient of kinetic friction of 0.40 or less.

14. The active energy ray curable resin composition according to claim 13,
wherein the surface of the anti-fogging and anti-fouling layer has a pure water contact angle of 80° or more and a hexadecane contact angle of 35° or more.

15. The active energy ray curable resin composition according to any one of claims 12 to 14,
wherein a content of the hydrophilic monomer in the active energy ray curable resin composition is 55% by mass to 90% by mass relative to the non-volatile matter of the active energy ray curable resin composition.

16. The active energy ray curable resin composition according to any one of claims 12 to 15,
wherein the active energy ray curable resin composition includes a solvent having a boiling point of 80°C or more.
